Europäisches Patentamt

European Patent Office

Office européen des brevets

(19)

(11) **EP 1 211 510 A1**

(12) **EUROPEAN PATENT APPLICATION**

(43) Date of publication:
**05.06.2002 Bulletin 2002/23**

(51) Int Cl.[7]: **G01N 27/447**

(21) Application number: **00126124.7**

(22) Date of filing: **29.11.2000**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Proteologics, Inc.
Orangeburg, NY 10962 (US)**

(72) Inventors:
• **Zilberstein, Gleb V.
Rehovot (IL)**
• **Bukshpan, Shmuel
Ramat-Hasharon (IL)**

• **Halavee, Uriel
Ramat-Gan (IL)**
• **Frumin, Leonid L.
Rehovot (IL)**
• **Peltek, Sergey E.
Rehovot (IL)**

(74) Representative:
**Meyers, Hans-Wilhelm, Dr.Dipl.-Chem. et al
Patentanwälte
von Kreisler-Selting-Werner
Postfach 10 22 41
50462 Köln (DE)**

(54) **Methods and apparatus for nonlinear mobility electrophoresis separation**

(57)     A method is disclosed for moving, isolating and/ or identifying particles in a sample by placing said sample in a spatially varying electrical field wherein the spatially varying electrical field is following a mathematical non-monotonous function, selected from the group consisting of linear, hyperbolic, parabolic, parabolic functions or $y \sim x^{p/q}$ and combinations thereof wherein p q means an integer. Also various devices are disclosed for performing the method.

Fig. 41

## Description

FIELD OF INVENTION

The present invention provides a method and apparatus for separation and focusing of cells, cell fractions, chromosomes and molecules, such as nucleic acids and proteins using the effect of nonlinear mobility and/or of non-uniform electric fields.

BACKGROUND OF INVENTION

Electrophoresis (EP), dielectrophoresis and electrochromatography are widely used techniques for the analysis, purification, manipulation and separation of mixtures of macromolecules and in particular the study of proteins, nucleic acids and cells. Most applications of electrophoresis are based on the transport of molecules in a supporting gel medium, under the influence of a static electric potential and constant electric field. Many variations of constant field electrophoresis have been employed based on tailoring the electric conductivity and field values by selecting the conductivity properties and pore sizes of the gels, the pH values and the electric potential magnitude. The most important in this category are one and two-dimensional electrophoresis, capillary electrophoresis, isoelectric focusing electrophoresis and others. Although most commonly used, these electrophoresis techniques have their limitations in separation capabilities regarding types of molecules, molecular sizes and molecular properties. In order to expand the capabilities and range of the techniques a large variety of methods and modifications have been developed for the electrophoretic separation of macromolecules and biological species. The new methods, presented here are based on the utilization of nonlinear molecular mobility in non-uniform electric fields produced by a change of the electric potential or by varying the electric properties of the separation media.

In 1984, Schwartz and Cantor described pulsed field gel electrophoresis (PFGE), introducing a new way to separate DNA. In particular, PFGE resolved extremely large DNA for the first time, raising the upper size limit of DNA separation in agarose from 30-50 kb to well over 10 Mb (10,000 kb). Applications of PFGE are numerous and diverse (Gemmill, 1991; Birren and Lai, 1990, 1993; and Van Daelen and Zabel, 1991). These indude doning large plant DNA using yeast artificial chromosomes (YAC's) (Ecker, 1990; see also Probe, Vol. 1, No. 1/2; and Butler, et al., 1992) and PI doning vectors (see Probe, Vol. 1, No. 3/4); identifying restriction fragment length polymorphism (RFLP's) and construction of physical maps; detecting in vivo chromosome breakage and degradation (Elia, et al., 1991); and determining the number and size of chromosomes ("electrophoretic karyotype") from yeasts, fungi, and parasites such as Leishmania, Plasmodium, and Trypanosoma.

The simplest equipment for PFGE is Field Inversion Gel Electrophoresis (FIGE) (Carle, et al., 1986). FIGE works by periodically inverting the polarity of the electrodes during electrophoresis. Because FIGE subjects DNA to a 180° reorientation, the DNA spends a certain amount of time moving backwards. Only an electrical field switching module is needed; any standard vertical or horizontal gel box that has temperature control can be used to run the gel. Although more complex in its approach, zero integrated field electrophoresis (ZIFE) (Turmel, et. al, 1990) also falls into this first category. Compared with simple FIGE, ZIFE is very slow. However, ZIFE is capable of resolving larger DNA and utilizing a larger portion of the gel. An other category contains instruments that reorient the DNA at smaller oblique angle, generally between 96° and 120° . This causes DNA to always move forward in a zigzag pattern down the gel.

A number of variants of pulsed-field gel electrophoresis (PFGE) have been described in the literature and are commercially available. In field-inversion gel electrophoresis (FIGE) the electric field alternates in polarity, and the durations of the "forward" and "backward" pulses (the pulse periods) are chosen to achieve a particular separation; net migration is achieved by using a longer time or higher voltage in one direction than in the other, e.g. US-A-4,737,252; Carle et al., Science, 232, 65 (1986). Several variants of field inversion gel electrophoresis (FIGE) have been described. In their original description of FIGE, Carle et al. presented separation data for identical field amplitudes, $E.sub.+ = E.sub.-$, but different forward and backward pulse durations, $t.sub.+ .noteq. t.sub.-$ (where $E.sub.+$ indicates an electric field causing a molecule to move away from its starting point in a gel, $E.sub.-$ indicates an electric field causing a molecule to move toward its starting point in a gel, $t.sub.+$ indicates the duration of a single pulse in field $E.sub.+$ and $t.sub.-$ indicates the duration of a single pulse in field $E.sub.-$). Carle et al. noted that resolution in a particular size range could also be achieved if $t.sub.+ = t.sub.-$ but $E.sub.+ .noteq. E.sub.-$. Carle et al., Science, 232, 65 (1986). Somewhat better separations are possible if different durations are used for $t.sub.\sim$ and $t.sub.-$, and different amplitudes are used for $E.sub.+$ and $E.sub.-$ ; this method has been termed Asymmetric Voltage Field-Inversion Gel Electrophoresis (AVFIGE). Birren et al., Nucl. Acids. Res. 18, 1481(1990); Denko et al., Analyt. Biochem. 178, 172 (1989). A variant of AVFIGE, called Zero Integrated Field Electrophoresis (ZIFE) has been explored by Noolandi and Tunnel. Tunnel et al., in Electrophoresis of Large DNA Molecules, Birren and Lai (Eds.), Cold Spring Harbor Press, 101-132 (1990); Noolandi and Tunnel, Pulsed Field Gel Electrophoresis, in Methods in Molecular Biology, vol. 12, p. 73, Burmeister and Ulanovsky (Eds.), Humana Press (1992). In ZIFE, both the pulse times and the pulse amplitudes are varied during a run, while in principle maintaining the product (E.sub.+ t.Sub.+) equal to (E. sub.- t.sub.-). With this condition, .intg. Edt=0 over an integral number of cycles. A common feature of pulsed-field gel electrophoresis (PFGE) and its variants is that the time-dependence is the same in all areas of the gel.

At any given time a single set of parameters defines the electric field being applied to the gel, although those parameters may change during the course of the electrophoretic separation. In contrast, in MZPFGE, multiple distinct electric fields are created within the gel, with distinct spatial regions of the gel subjected to different fields at the same time.

Contour-clamped homogeneous electric field (CHEF) (Chu, et al., 1986, 1990); transverse alternating field electrophoresis (TAFE) (Gardiner, et al., 1986) and its relative ST/RIDE (Stratagene); and rotating gel electrophoresis (RGE) (Southern, et al., 1987; Anand and Southern, 1990; Gemmill, 1991; and Serwer and Dunn, 1990) are all examples of commonly used transverse angle reorientation techniques for which instrumentation is available. In a further elaboration of the above procedures, Lai and coworkers developed the programmable autonomously controlled electrophoresis (PACE) unit which allows complete control over reorientation angle, voltage, and switch time (Clark, et al., 1988; and Birren, et al., 1989). In contrast with FIGE, these Systems require both a special gel box with a specific electrode and gel geometry, and the associated electronic control for switching and programming the electrophoresis run.

TAFE and ST/RIDE use a complicated geometry between the electrodes and a vertically placed gel to get straight lanes. CHEF and RGE maintain a homogeneous electric field in combination with a horizontal gel. CHEF changes the direction of the electric field electronically to reorient the DNA by changing the polarity of an electrode array. With RGE the electric field is fixed; to move the DNA in a new direction, the gel simply rotates. Rotating Gel Electrophoresis (RGE) is one of the most recent commercial introductions of pulsed field equipment and combines variable angles with a homogeneous electric field (Southern, et al., 1987; Anand and Southern, 1990; Serwer and Dunn, 1990; and Gemmill, 1991).

Isoelectric focusing is an electrophoretic technique wherein an electric field is applied to a molecule in a pH gradient to mobilize the molecule to a position in the pH gradient at which its net charge is zero, i.e., the isoelectric point (pI) of the molecule. It is often used to separate proteins in a mixture and as an aid in characterization of biomolecules of unknown composition. Commercially available gradients may be utilized in isoelectric focusing which consist of multicharged ampholytes, with closely spaced pI values and low conductivity, which partition into a pH gradient upon application of an electric field. The ampholytes are generally provided in a support matrix, such as a polyacrylamide gel.

Molecules separated by isoelectric focusing may be visualized, e.g., by silver staining or Coomassie blue staining. Deutscher, Ed., Methods in Enzymology, Vol. 182, Academic Press, Inc., San Diego, Calif, 1990, Chapter 35.

Capillaries have been used in various electrophoretic techniques including isoelectric focusing. Novotny et al., Electrophoresis, 11:735-749 (1990). US-A-5,061,361 (1991) relates to a capillary electrophoresis system in which a nanoliter volume of sample is introduced into the capillary tube, and an electric field is imposed on the system to effect separation of the charged components. After migration along the length of the tube, the sample components are detected via ultra-violet absorbance. US-A-5,084,150 (1992) relates to an electrokinetic separation in which the surface of moving charged colloidal particles is treated so as to interact selectively with the sample molecules to be separated. An electric field is imposed on a capillary tube containing the colloidal particles and the sample to achieve separation. US-A-5,045,172 (1991) relates to a capillary electrophoresis apparatus in which electrodes are attached at each end of a capillary tube, and a detector is coupled to the tube. US-A-4,181,589 (1980) relates to a method for separating biological cells using an electric field.

In electrophoretic methods for separating large double stranded DNA molecules, several techniques have been advanced to increase the band resolution (i. e., increase the distance between bands without a corresponding increase in the width of the bands, or decrease the width of the bands without a corresponding decrease in the distance between bands). The advantages of pulsing the electric field (i.e., periodically changing the field orientation) during gel electrophoresis of high molecular weight double-stranded DNA was first demonstrated by Schwartz and Cantor. Schwartz et al., Cold Spring Harbor Symp. Quant. Bi. 47, 189 (1983); Schwartz and Cantor, Cell 37, 67 (1984); Cantor and Schwartz US-A-4,473,452; Gardiner et al., Somatic Cell Mol. Genet., 12, 185 (1986).

Further background information on conventional gel electrophoresis of DNA can be made by reference to a text such as Rickwood and Hames, Gel Electrophoresis of Nucleic Acids: A Practical Approach, IRL Press, Oxford, UK, particularly chapter 2, "Gel Electrophoresis of DNA", by Sealey and Southern. For background information on attempts to achieve Separation of very large DNA molecules by conventional gel electrophoresis, reference can be made to papers by Fangman, Nucleic Acids Res. 5:653-665 (1978); and Serwer, Biochemistry 19, 3001-3004 (1980). Implementation of the transverse-field technique (also defined as orthogonal-field-alternation gel electrophoresis, or OFAGE) and applications to the chromosomal DNA molecules from yeast are described by Carle and Olson, Nucleic Acids Res. 12: 5647-5664 (1984). A description of the complete analysis of the set of chromosomal DNA molecules from yeast using the transverse-field technique is further reported by Carle and Olson. Proc Natl Acad Sci (USA) 82: 3756-3760 (1985). Other background information on the application of the transverse- field technique of gel electrophoresis to chromosomal DNA molecules is provided by Van der Ploeg et al., Cell 37: 77-84 (1984); Van der Ploeg et al., Cell 39: 213-221(1984); and Van der Ploeg et al., Science 229: 658-661(1985).

The powerful impact of the isoelectric focusing method stimulates the search and development of new methods for molecular focusing and specially methods for DNA, chromosome and cell focusing for which the pI (Isoelectric Point) method is unsuitable. In the last years approaches were based on the choice of gels with optimal pore dimensions or varying pore size.

The careful study of the electric focusing process prompts the introduction of alternative techniques for detecting in vivo chromosome breakage and degradation (Elia, et al., 1991); and determining the number and size of chromosomes ("electrophoretic karyotype") from yeast's, fungi, and parasites such as Leishmania, Plasmodium, and Trypanosome.

Various pulsed electrophoresis techniques have been proposed to improve the resolution of gel electrophoresis and expand the mass range of separated molecules toward heavier and larger particles. Examples of these techniques are: "Orthogonal Field Alternating Gel Electrophoresis" (OFAGE) and Transversal Alternating Field Electrophoresis (TAFE) as proposed by K.Gardiner et al, Nature 331, page 371-2. (1988), "Field Inversion Gel Electrophoresis" (FIGE) described in US-A-4,737,251, and Zero Integrated Field Electrophoresis (ZIFE) as described by C.Turmel et al. in Electrophoresis of Large DNA Molecules: Theory an Applications, Cold Spring Harbor Laboratory Press (1990). A specific application of FIGE for high resolution separation of single strand DNA was described by E.Lai in US-A-5,178,737.

All these above listed techniques belong generally to the important method for separation and sorting of large particles and in particular cells named dielectrophoresis and are defined as the movement of a polarisable particle in a non-uniform electric field. The force arises from the interaction of the field non-uniformity with a field induced charge redistribution in the separated particle. This charge redistribution results in electrical polarization in the specific separation medium as expressed by the formula:

$$m = 4\pi\varepsilon_m \, K(\varepsilon^*_p, \varepsilon^*_m) a^3 E$$

where

$$K(\varepsilon^*_p, \varepsilon^*_m) = (\varepsilon^*_p - \varepsilon^*_m)/(\varepsilon^*_p + 2\varepsilon^*_m)$$

is the well known Clausius - Mossoti factor, $\varepsilon^*_p$ and $\varepsilon^*_m$

are the complex permittivities of the particle and medium respectively, a being the radius of the particle and E is the applied electric field. The medium generally applicable for these techniques is not limited to gels but can be any conductive liquid medium such as a buffer solution or electrolyte.

The basic equation, which determines the multipole force components acting on a dielectric particle in a nonhomogenous, axisymmetric electric field is given by:

$$F^{(n)}_z = 2\pi\varepsilon_1 K^{(n)} R^{2n+1} / \, n!(n-1)! \, \{\partial/\partial z \, [\partial^{n-1} E_z/\partial z^{n-1}]$$

Here $F^{(n)}$ is the force component due to the n-th multipole interaction, K is the Clausius- Mossoti factor and $E_z$ is the axial electric field.

Particles are manipulated using non uniform electric fields generated by various configurations of electrodes and electrode arrays. As a general biotechnological tool, dielectrophoresis is extremely powerful. >From a measurement of the rate of movement of a particle the dielectric properties of the particles can be determined. More significantly, particles can be manipulated and positioned at will without physical contact, leading to new methods for separation technology.

A powerful extension of dielectrophoresis separation is Traveling Wave Dielectrophoresis (TWD) in which variable electric fields are generated in a system of electrodes by applying time varying electric potentials to consecutive electrodes. Such a method of Travelling Wave Field Migration was used by Parton et al. In US-A-5653859.

A detailed explanation of the dielectrophoresis method was given by T.B.Jones in "Electromechanics of Particles", Cambridge University Press 1995.

A number of methods are known for cell separation. The mostly commonly employed method are Flow Cytometry and FACS. Other methods include mechanical sorting, density gradient separation, magnetic sorting, electrostatic methods like field rotation sorting and dielectrophoresis.

The electrostatic methods when applied for cell handling have an inherent advantage over other methods of manipulation like mechanical sorting, centrifugation, filtering or density gradient sorting. When the electrophoretic effect is used for the actuation of the cells, special precautions must be taken against electrolytic dissociation that might take place at the electrode-solution interface. Dielectrophoresis is more suitable because the dissociation is avoidable with the use of high-frequency voltages, i.e. alternating voltages

Another important technique, which combines dielectric forces on particles with a gradient flow is the Field Flow Fractionation method. This method for the analysis and manipulation of mixtures of macromolecules, cells and chromosomes has been proposed and demonstrated in recent US-A-5,858,192 and 5,888,370 by Becker et al. Another similar technique applied to cell separation is the CFS (Charge Flow Separation) method as disclosed in US-A-5,906,724 and references therein.

A very important field of activity is the manipulation and design of electric fields is the field of microarrays and lab on chip system. In these systems microfluid channel arrays are combined with multi electrode arrays to produce a miniaturized laboratory for the movement, separation and identification of bioparticles. Example of such systems are as given by Manz et al in US-A-5,599,432, Chow et al in US-A-5,800,690, by J. M. Ramsey in US-A-5,858,195, Zanzucchi et al in US-A-5,863,708 and US-A-5,858,804. An interesting invention relating to microfluidic systems is given by Kopf-Sill et al. in which variable dimension channels are introduced to facilitate the motion of particles through interconnects and turns (US-A-5,842,787).

In all the above mentioned methods and inventions the design of the electric fields was obtained by manipulating the electric potentials in time and intensity and by addressing various electrodes.

Other methods of obtaining nonhomogenous fields have been based on introducing a concentration gradient in the separating medium or varying the thickness of the matrix material (Sugihara ,US-A-5,190,629) and others by utilizing gradient gels or by shaping the buffer layer thickness as proposed by D. Perlman in US-A-5,518,604.

M.Washizu has proposed a system for manipulation of biological objects based on a combination of electrodes and insulators in which variable field profiles could be obtained [M. Washizu, J. Electrostatics, V25,109-123 (1990)].

US-A-4,148,703 discloses a method of electrophoretic purification of enzymes and peptides, which is a continuous, modularized, one-step operation. The process is modularized with interchangeable parts and contains several divergent configurations of the electrodes, such as diagonal linear electrodes, point or ball electrodes, parabolic electrodes, arced electrodes and other geometrically shaped electrodes. The method enables the user to secure a high purification of enzymes and peptides simultaneously as it allows purification on a large scale. The modularization permits the easy insertion and removal of different geometrically shaped electrodes, which allow a multifunctional versatile implementation and application of electrophoresis in the purification of electrically charged biomolecules. The method disclosed, however, is limited to charged biomolecules and relatively complicated to run.

US-A-4,261,835 deals with thin layered and paper chromatography and uses variable cross sections and shaped absorbents to control spreading of chromatography spots.

US-A-2,868,316 discloses conical, tapered separation columns for a kind of gas chromatography. Gas chromatography is not suitable to separate and purify biomolecules.

US-A-5,759,370 discloses a device and a method for isoelectric focusing of ampholytes in a buffer. According to US-A-5,759,370 a cone-shaped capillary with a positive electrode connected at a narrow end and a negative electrode connected at the wide end of the capillary. The electrical potential aross the buffer creates a temperature gradient which, in turn, creates a pH gradient. The electric current also creates an electric field gradient which focuses the ampholytes.

Ansorge et al discloses in J. of Biochem. Biophys. Meth. 10 (1984) 237-243 a simple field gradient technique which leads to sharpening of bands of DNA and to an increase in the number of receivable bases per gel. About 300 bases per sample applications could be resolved on a 53 cm long field gradient 6 % gel, compared with about 200 on a standard gel. Gels of increasing cross-sectional area, producing the field gradients, are prepared by varying the thickness of spacers along the gel.

E. Boncinelli et al, Anal. Biochem. 134, 40-43 (1983) disclose agarose slab gel of steadily increasing thickness to resolve DNA fragments ranging from several kilobases to some tens of base pairs in length. During electrophoresis a gradient of decreasing electric-field strength is generated throughout the gel from the cathode end and to the anode end. Shorter fragments, which migrate further are decelerated, resulting in an increased linearity of the relationship between mobility and molecular weight.

G.W. Slater et al, Electrophoresis, 9, 643-646 (1988) reports about a mathematical study of the effect of non-uniform electric fields on the width of DNA electrophoretic bands. Using a simple model it was shown that field gradients sharpen these bands during an experiment if the corresponding gradient of electrophoretic velocity is large enough. This is in agreement with experimental results indicating that narrower bands from one pulse field electrophresis is carried out in the presence of field gradients. There report also that gradients are predicted to reduce the relative mobilities of the DNA fragments, which is a serious drawback of this technique.

The International application PCT/IB 00/00723 discloses a method for moving, isolating and/or identifying particles in a sample by placing said sample in a spatially varied electrical field which acts independently and selectively on charges, dipolar and/or higher moments of the particle in a medium.

This method discloses several methods of utilization of the effect of nonlinear mobility and/or non-uniform electric field for (preparative) separation and improved analysis of entities such as cells, particles, organelles, macromolecules in a large variety of sizes and especially in the separation of DNA and its fragments and other biological molecules such as RNA, lipids, polysaccharides, proteins and the like. Specifically, nonlinear corrections of molecular mobility in an electric field are used for improving separation and peak narrowing in a medium.

PCT/IB 00/00723 also discloses an electrophoresis system which separates charged biological macromolecules by means of inducing a non-uniform electrical field across a buffer of electrolyte solution and support medium, which contain those molecules. The system includes a power supply and control system which has a wide dynamic range of constant voltage, current and power which may be supplied, and is therefore particularly suited to the needs of the electrophoresis system.

The object of the present invention is to provide further efforts and devices for performing electrophoresis and dielectrophoresis as disclosed in PCT/IB 00/00723.

The method of the invention is in one embodiment a method for moving, isolating and/or identifying particles in a sample by placing said sample in a spatially varying electrical field wherein the spatially varying electrical field is following a mathematical non-monotonous function selected from the group consisting of linear, hyperbolic, parabolic functions, $y \sim x^{-p/q}$ and combinations and/or substitutions thereof wherein p and q are integers.

The feature "non-monotonous function" of the present invention is advantageous since using electrical fields defined by such geometries solve problems occurring with relatively large local temperature gradients if monotonous mathematical functions for shaping the electrical field are used. PCT/IB 00/00723 i. a. discloses separation media shaped in a hyperbolic manner in order to induce a non-uniform electric field. The particular wedge-shaped separation media have a wide and a narrow cross-section at their respective ends, wherein the end portion having the narrower cross-section shows an increased electric field and hence increased temperature. In most instances, the temperature of any separation methodology needs to be stabilized, e.g. using a thermostat. This is especially true for the wedge-shaped separation process in which a spatially varying temperature distribution occurs. Indeed, often a wedge geometry will be used to induce such a temperature distribution. At the wide end portion the induced temperature will be relative close to that of the thermostat, while at the narrow end portion the temperature will be significantly higher than that of the thermostat. This leads to steep temperature gradients near the end portion of the separation medium which can disturb the separation process. To circumvent this problem smooth tapering out of the narrow (separation) section to a wider section is beneficial. This creates a long monotonous part and a short monotonous part, having a common narrow cross section; the long part is used to separate the biomolecules, whereas the short part serves to smoothly taper out the end conditions of the long monotonous part. Furthermore, electrophoresis of a sample in which also the electric field more smoothly tapers out may have advantages such as the creation of a longer stopping zone for at least some macromolecules.

Another aspect of the invention relates to a method for the separation and/or isolation and/or enrichment of cells and/or cell fragments by applying a periodic voltage with substantially zero average in a separation vessel wherein the separation vessel has a varying cross section and at least one channel or tube connected to it substantially near the average cross section. Furthermore is disclosed a device for the separation and/or isolation and/or enrichment of cells and/or cell fragments in a separation vessel wherein the separation vessel has a varying cross section and at least one channel or tube connected to it substantially near the average cross section. In addition is disclosed is device according to the invention having a plurality of separation vessels. The method according to the invention for the separation and/or isolation and/or enrichment of cells and/or cell fraction in a device consisting of a plurality of separation vessels wherein the separation vessels have at least one common channel. The method according to the invention in which sequentially the following procedures are performed: (1) applying an a periodic voltage with substantially zero average in the part of the separation vessel with varying cross section; (2) applying a dc electric field across the channel. The dc electric field transports the selected cells or cell fractions through the channel, at which end either the cells or cell fractions are collected or the process repeated. The plurality of separation vessels interconnected by channels can be arranged in a circular manner, thus enabling any number of separation, isolation and/or enrichment cycles.

Brief description of the drawings.

Fig. 41: shows an electrophoresis gel slab according to the invention.

Fig. 42: shows a further separation medium designed according to the present invention.

Fig. 43 shows yet another embodiment of a separation medium of the invention.

Fig. 44 shows a further embodiment of the separation medium according to the invention, which is similar to that of Fig. 41, but having a function that is piece-wise continuous in its wider part 11.

Fig. 45 shows an electrophoresis performed in the embodiment of Fig. 44.

Fig. 46 shows another separation medium according to the invention, which is able to accept more than one sample run in an electrophoresis in parallel.

Fig. 47 shows another embodiment of a separation gel according to the invention suitable for performing isoelectric focusing.

Fig. 48 shows various embodiments of a 2D-electrophoresis device.

Fig. 49 shows the nonlinear mobility of RBC determined by measuring the RBC drift velocity as a function of electric field.

Fig. 50 shows a cell separation device consisting of a plurality of 3 separation vessels interconnected by connecting channels.

Fig. 51 shows a circular cell separation device.

Fig. 52a shows an initial separation after ∼ 15 min into two distinct clusters.

Fig. 52b shows a transport of RBC through the channel under 60 volts dc.

Fig. 52c shows a separation in the second wedge.

Fig. 52d shows the arrival of the RBC cluster in the third wedge after transport from the second wedge.

Fig. 53 shows a linear arrangement of separation chambers linked by channels.

The following figures deal with embodiments, which are disclosed in PCT/IB 00/00723.

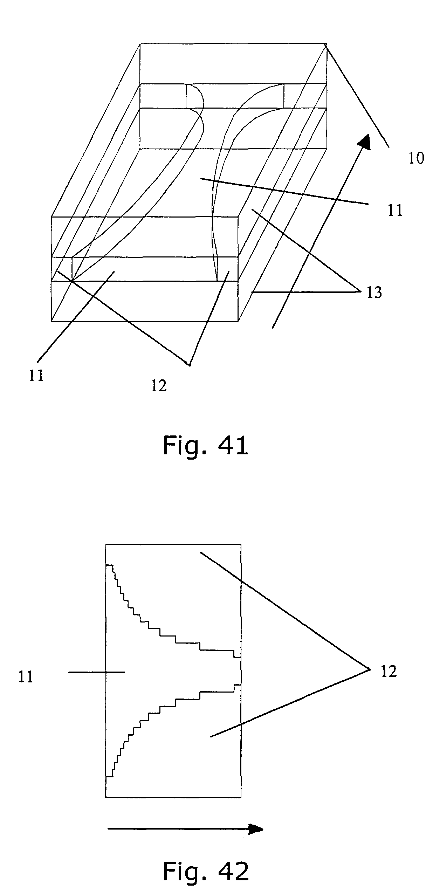

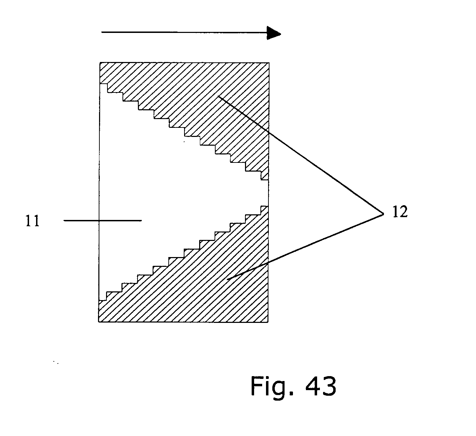

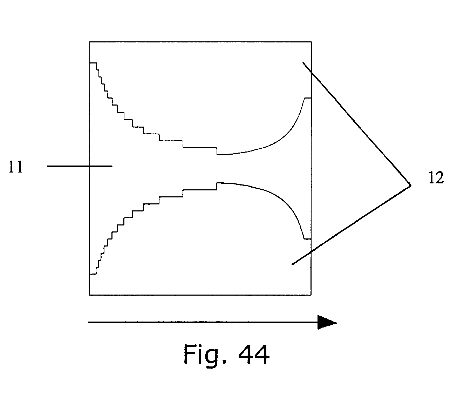

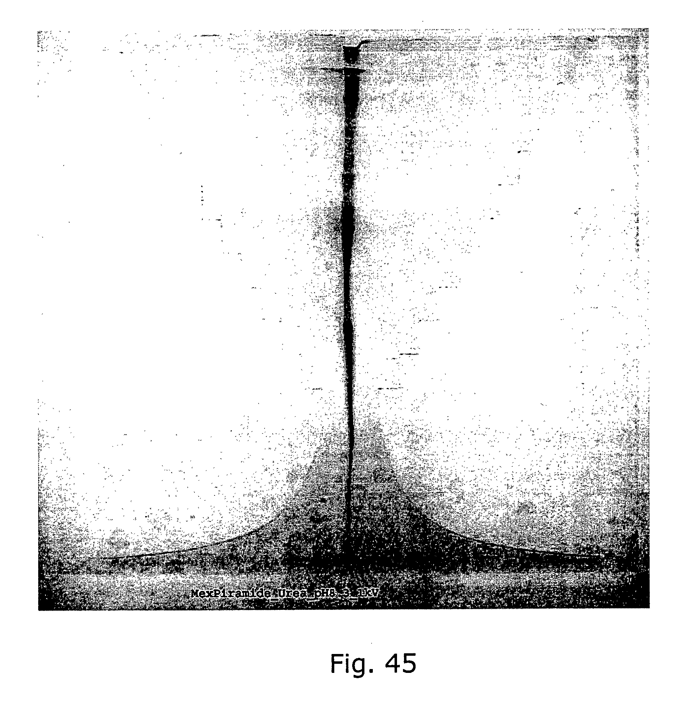

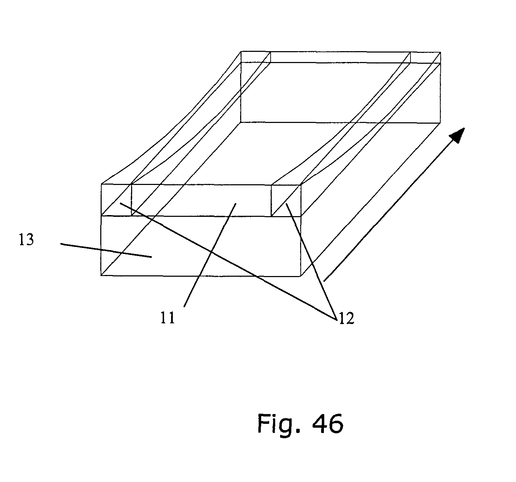

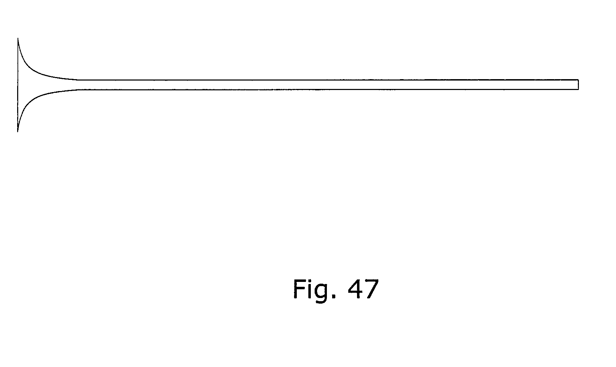

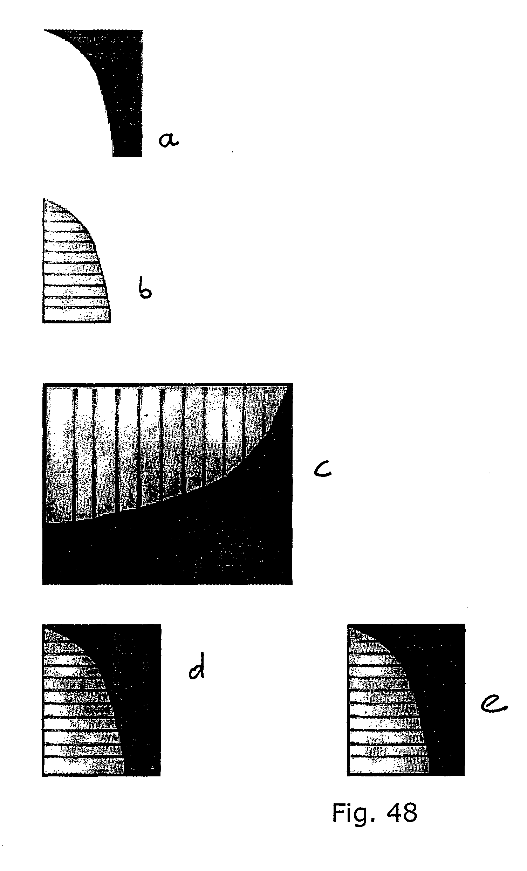

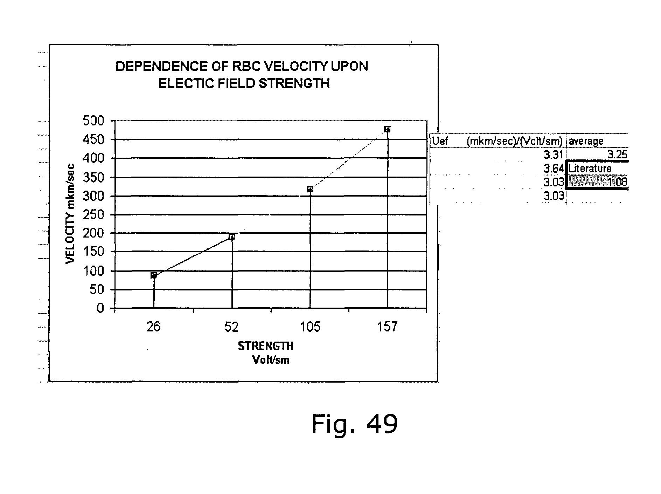

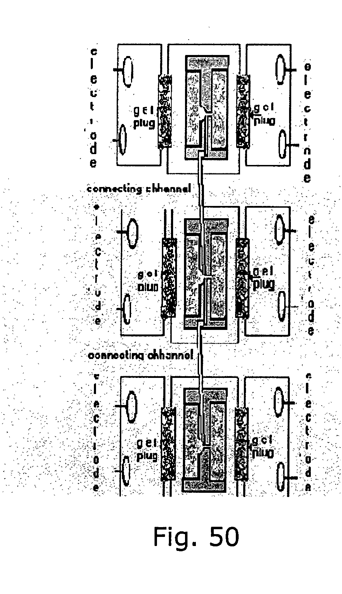

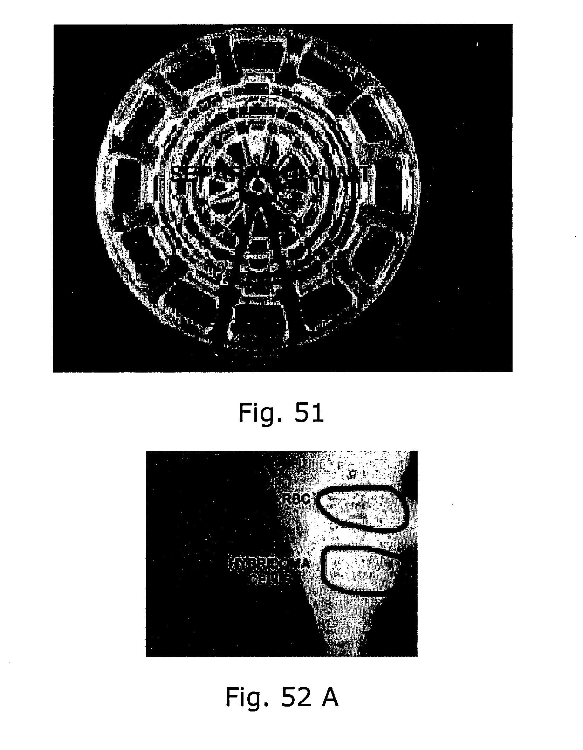

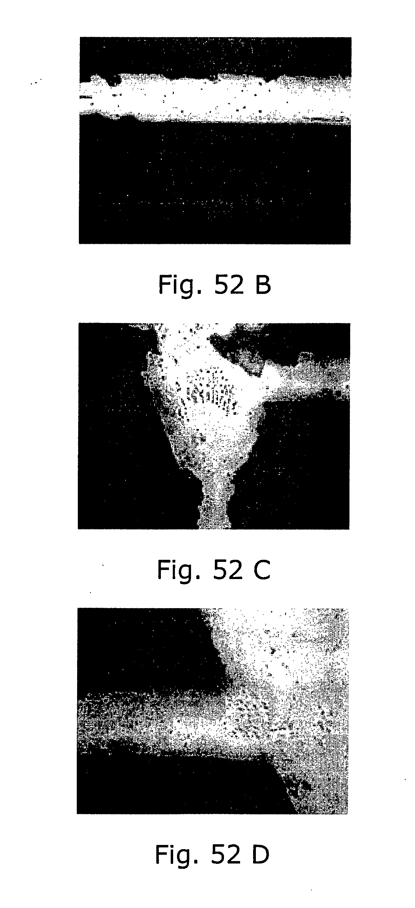

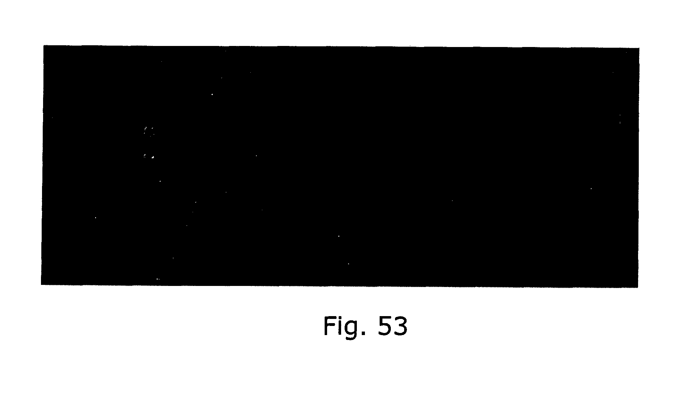

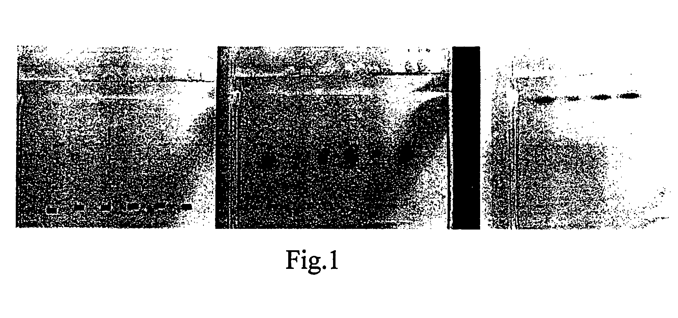

Fig. 1: Concentration of bromophenol blue dye in the electric field gradient under transition from a region with a low conductivity determined by concentration of electrolyte buffer with an amount of 0.1 M TAE (Tris acetate EDTA buffer 0.004 M) to a region with a high electric conductivity (the buffer concentration is tris acetate EDTA buffer 0.04 M, pH =7.2) region. Panel A shows the start of the process; the dye is in start pocket; Panel B shows diffusion spreading of the dye during the electrophoresis; and Panel C shows the effect of dye focusing after crossing the boundary between the low and high conductive gels.

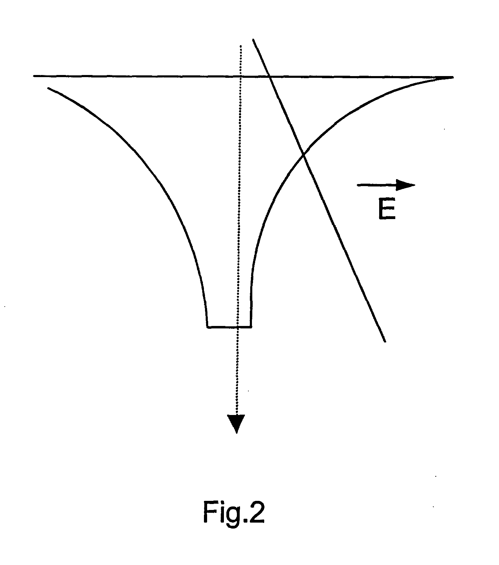

Fig. 2: Schematic of a Hyperwedge with rectangular cross section, varying hyperbolically. The electric field is linearly increasing in the X direction.

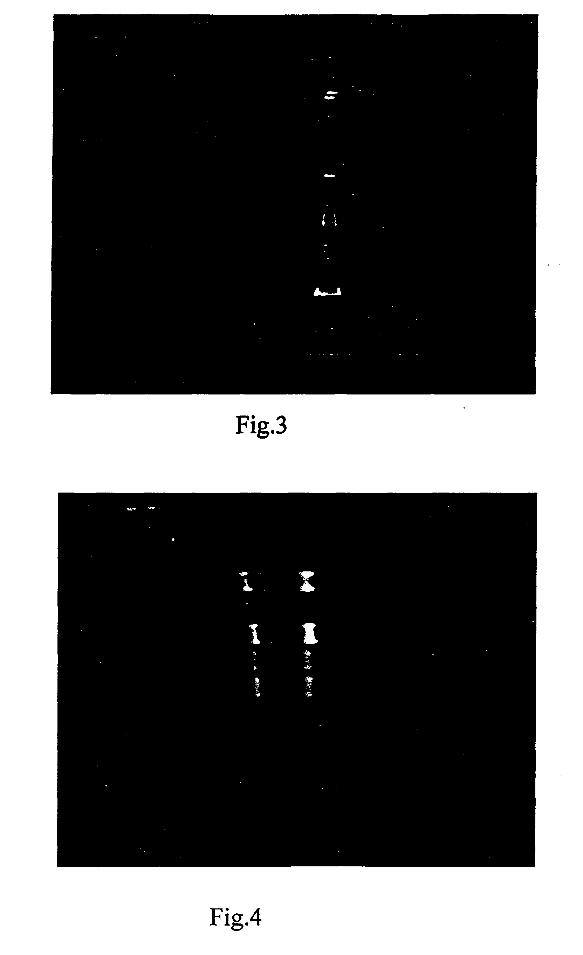

Fig. 3: Electropherogram of fragments of hydrolyzed DNA lambda phage HIND III in a Hyperwedge 0.6% agarose gel. Voltage 20 V.

Fig. 4: Electropherogram of fragments of hydrolyzed DNA lambda-phage HIND III in 1.0% agarose gel. (Regular electrophoresis without wedge).

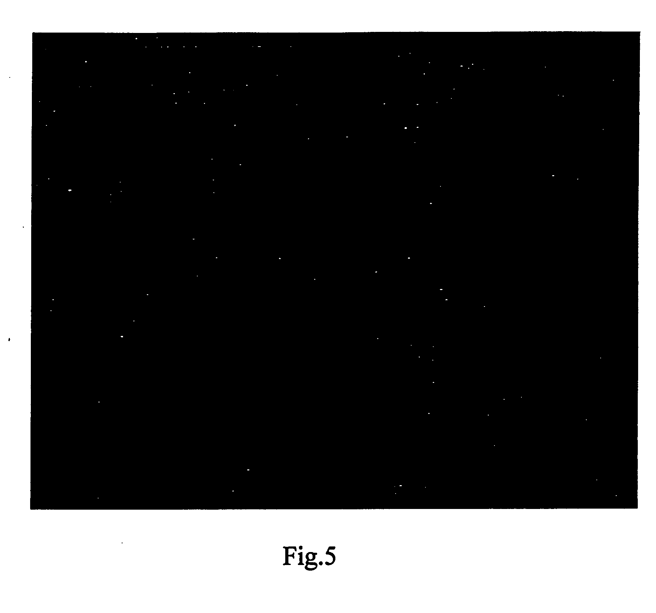

Fig. 5: The results of DNA lambda phage HIND III hydrolyzed fragments focusing. The field period is 138 seconds (reverse) +30 seconds (forward) and the non-homogeneous wedge aspect ratio is 1:10. The experiment duration is 30 hours and operating voltages are -64 V and + 22 V respectively.

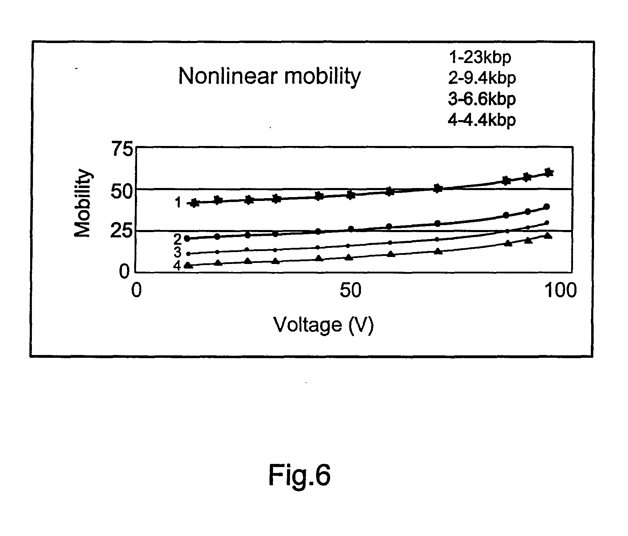

Fig. 6: Nonlinear electrophoretic mobility of fragments of DNA lambda phage HIND III hydrolizate.

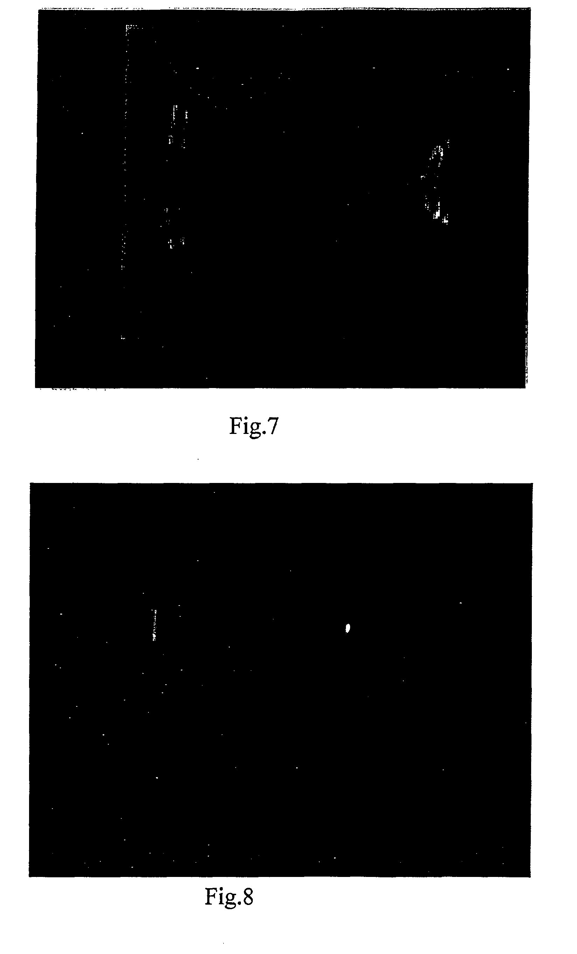

Fig. 7: DNA lambda phage HIND III hydrolyzed fragments focusing results. The field period is 138 (reverse) +30 (forward) seconds in a non-homogeneous wedge with aspect ratio 1:10. The experiment duration is 16 hours for the top picture and 36 hours for the bottom picture. Operating voltages are -64 V and + 22V.

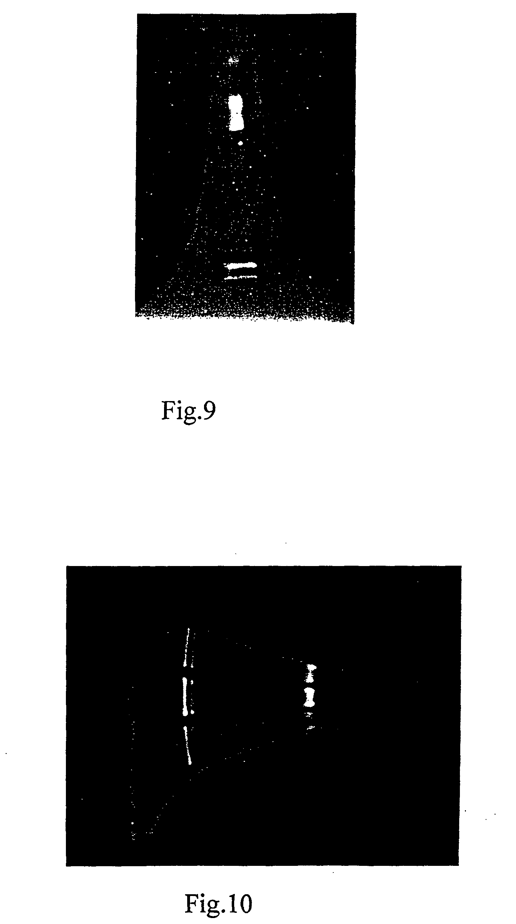

Fig. 8: DNA lambda phage HIND III hydrolyzed fragments focusing results. The field period is 15 seconds (reverse) + 5 (forward) seconds in a non-homogeneous wedge with aspect ratio 1:10. The experiment duration is 30 hours and operating voltages are -62 V +22 V.

Fig. 9: DNA lambda phage HIND III hydrolyzed fragments focusing results. The field period is 15 (reverse) +5 (forward) seconds in a nonhomogeneous wedge with aspect ratio 1:10. The experiment longevity is 48 hours and operating voltages are - 81 V +30 V with water cooling.

Fig. 10: DNA lambda phage HIND III hydrolyzed fragments focusing results. The field period is 15 (reverse) + 5 (forward) seconds in a non homogeneous wedge with aspect ratio 1:10. The experiment duration is 24 hours and operating voltages are - 81V + 30V with water cooling.

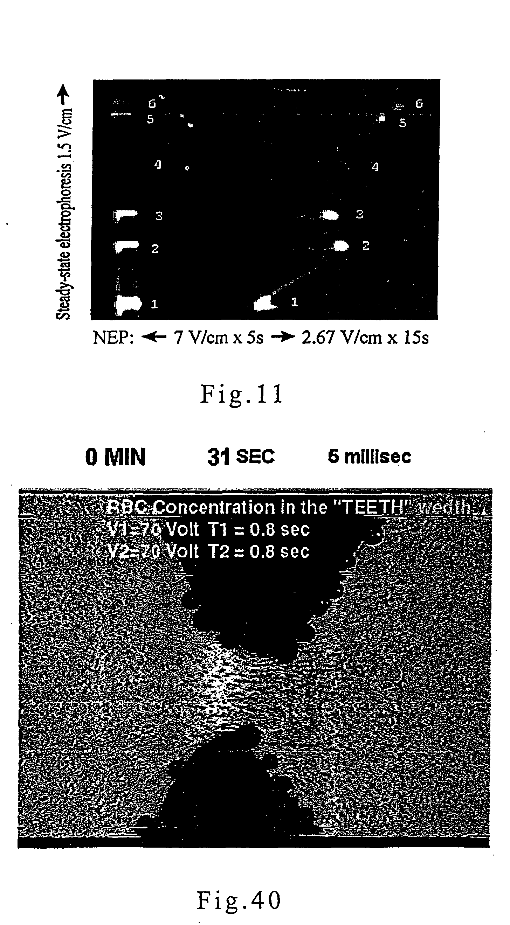

Fig. 11: 2-dimensional gel electrophoresis of DNA lambda phage HIND III hydrolyzed fragments. First dimension: nonlinear mobility drift during 24 hours (the field period is 15 reverse + 5 forward seconds and voltages are -81 V +27 V accordingly) with water cooling. Second dimension: regular electrophoresis with duration of 12 hours and voltage 15 V.

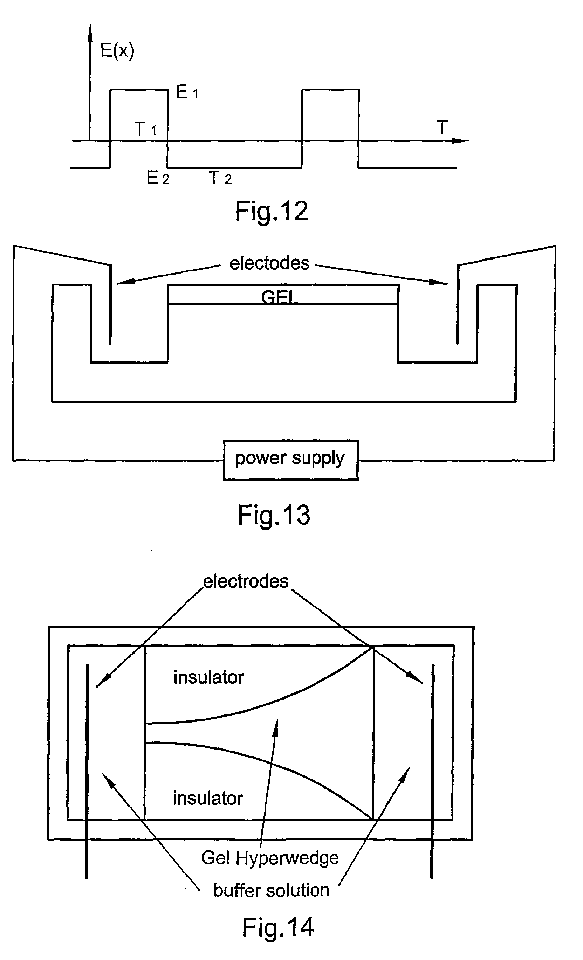

Fig. 12: Schematic diagram of the meander of electric field. $E(t) = U(t)/L$ [V/cm]; $E1 = U1/L$ [V/cm]; $E2 = U2/L$ [V/cm]; $T1 =$ [sec]; and $T2 =$ [sec] .

Fig. 13: Side view of an electrophoretic cell.

Fig. 14: Upper view of the electrophoretic cell having a hyperwedge geometry.

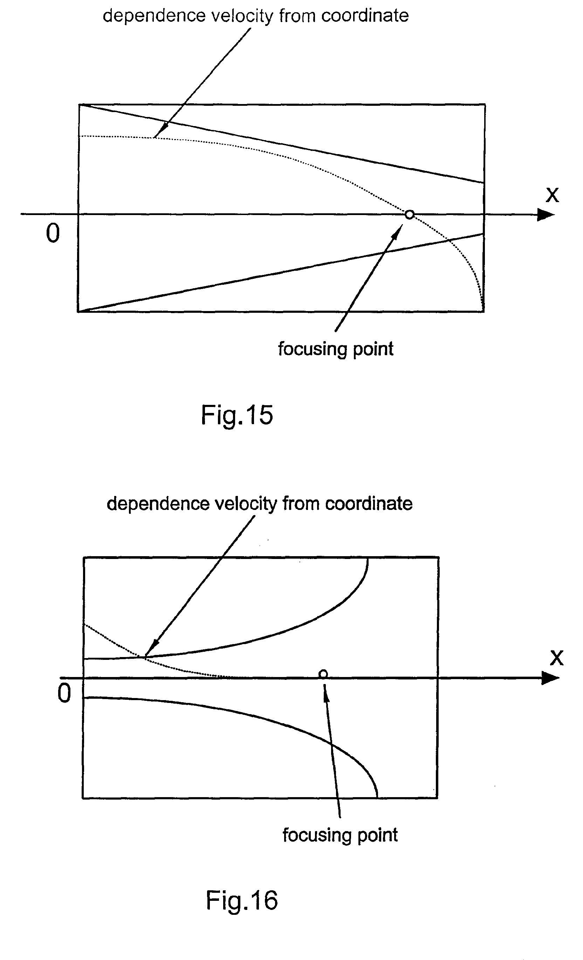

Fig. 15: Schematic of a geometric trap with a linear coordinate dependence of the field strength $E(x) \sim const-x$.

Fig. 16: Schematic of a geometric trap with hyperbolic coordinate dependence of the field strength $E(x) \sim x^{-1}$.

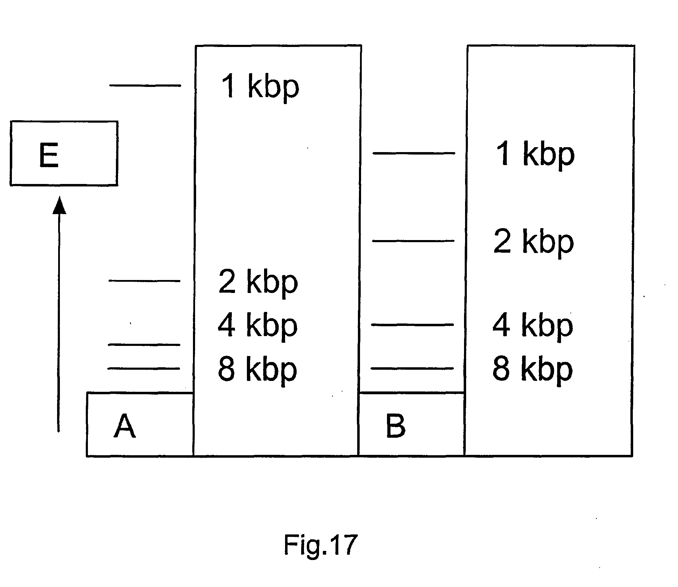

Fig. 17: Schematic results of electrophoretic separation in the case of regular electrophoresis for simple planar cell (A), and for hyperbolic geometric trap cell (B).

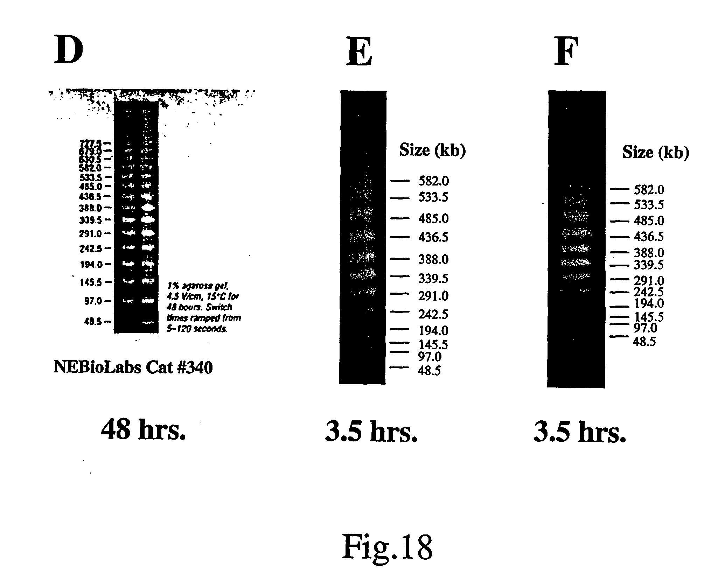

Fig. 18: Comparison of results of separation of standard marker $\lambda$ ladder by the method of the invention and with conventional PFG separation. D. Conventional Pulsed Field Gel Electrophoresis to separate PFG $\lambda$ ladder. Separation was achieved after 48.0 hours (up to $\sim$ 725.0 kb). E. and F. Methodology of the invention to separate PFG $\lambda$ ladder. Preliminary experiments have achieved separation of over 550.0 kb in 3.5 hours.

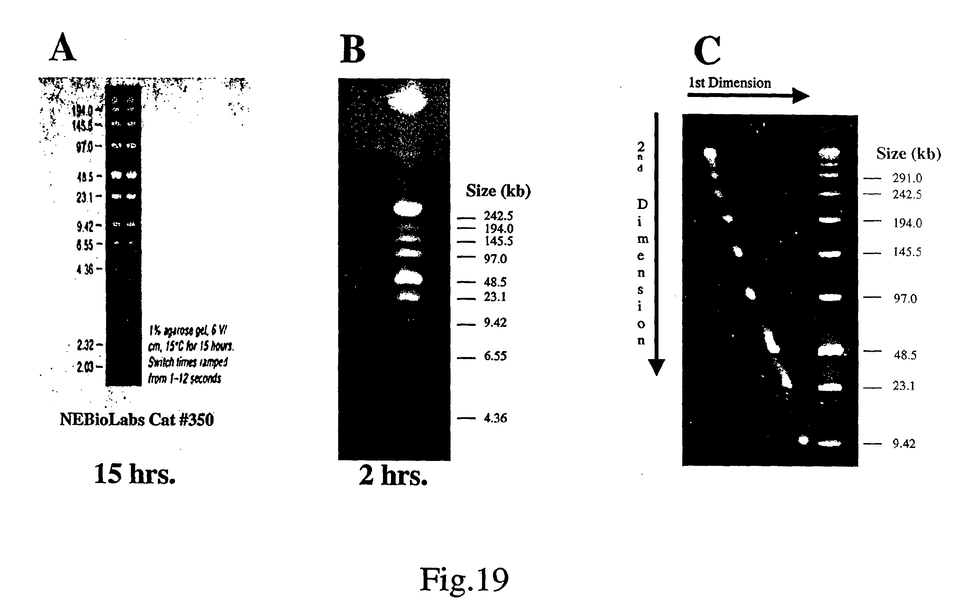

Fig. 19: Comparison of results of separation of standard low range PFG marker by conventional methods with the method of invention. Total run time to achieve separation of DNA up to 194.0 kb is 15 hours. Methodology of the invention to separate Low Range PFG Marker. Total run time to achieve separation of DNA above 242.0 kb is 2 hours. Figure C illustrates 2-D Pulsed Field Gel Electrophoresis of gel from Figure B. where DNA fragments migrated according to size.

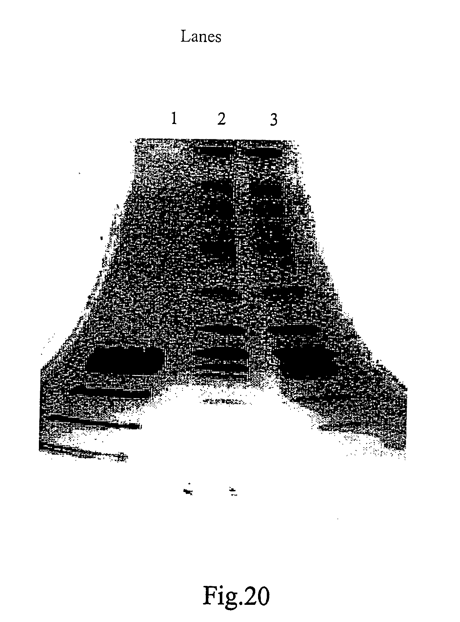

Fig. 20: Results of the separation of several standard markers by the method of the invention. Lanes: 1. Low Range Marker; 2. lambda ladder; 3. s.cervese PFG marker 0.5 % Chromosomal Agarose in TAE; Forward Pulse: 88V, 10 sec; Reverse Pulse: 36V, 7sec; Total run time = 3.5 hrs.

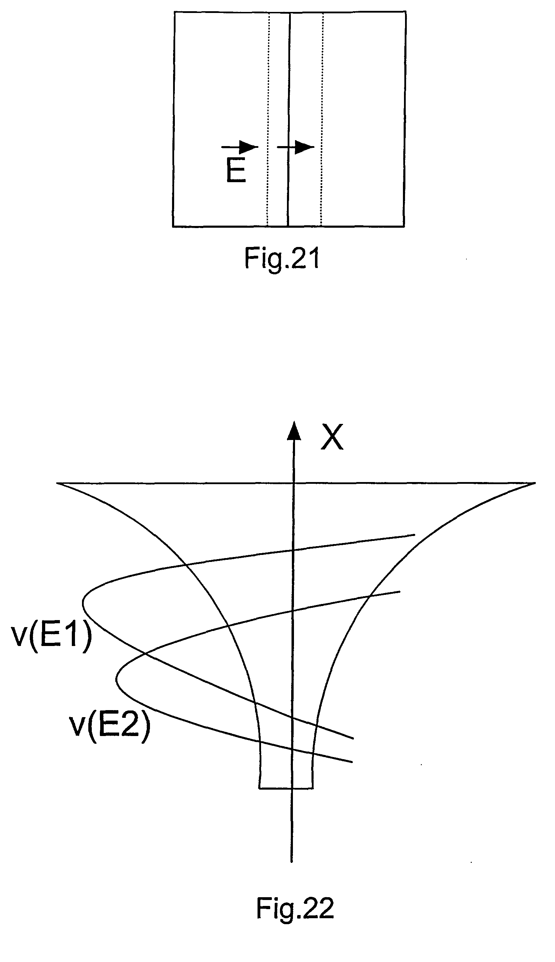

Fig. 21: The non-uniform field in the "start" method formed by a concentration gradient of the buffer electrolyte. The geometry used in this method is a regular rectangular gel slab, as in regular electrophoresis.

Fig. 22: Velocity changes of DNA fractions proportional to the intensity of the field.

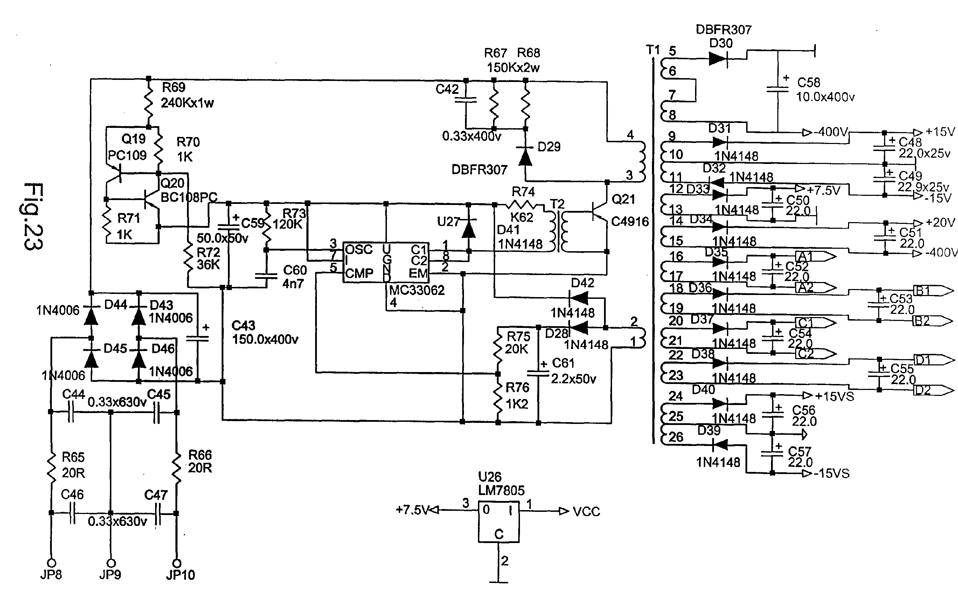

Fig. 23: Circuit schematic for power supply relay device

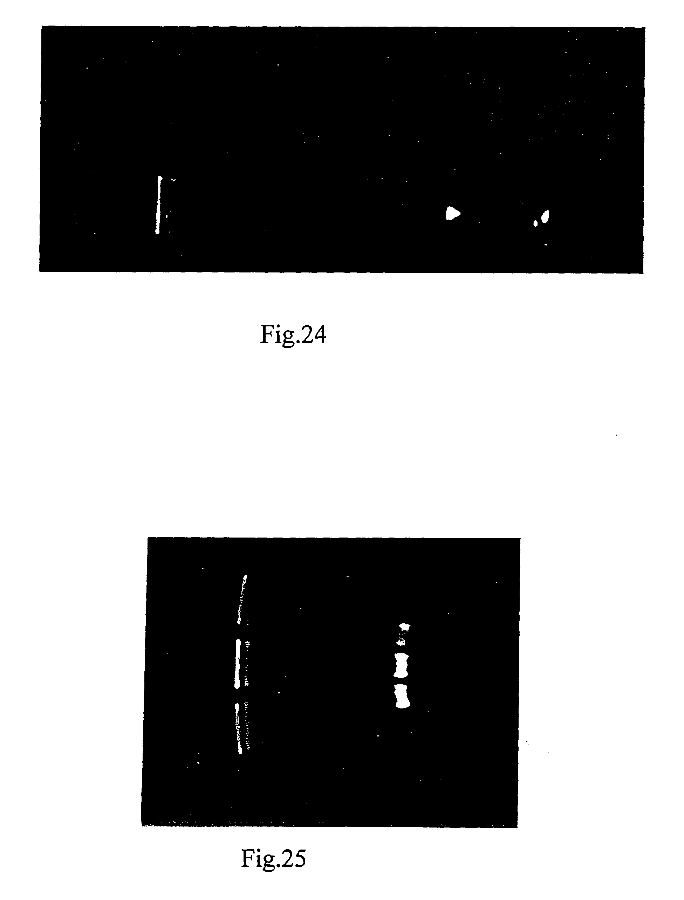

Fig. 24: Fraction compression in linear wedge at constant potential

Fig. 25: Fraction compression in hyperbolic wedge at constant potential

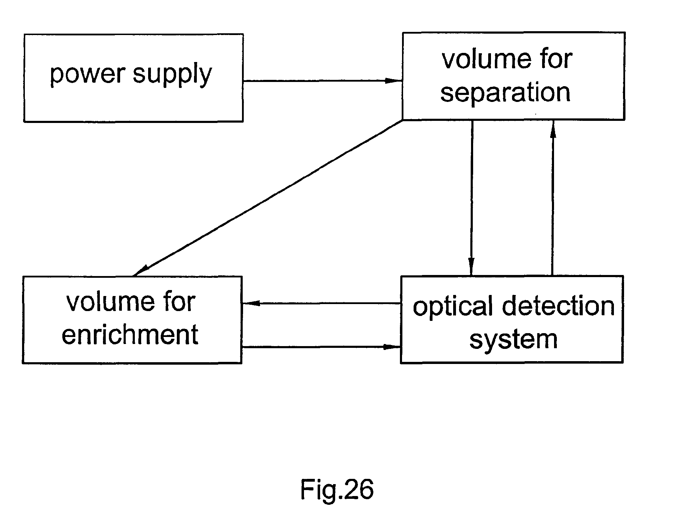

Fig. 26: General diagram of cell separation system

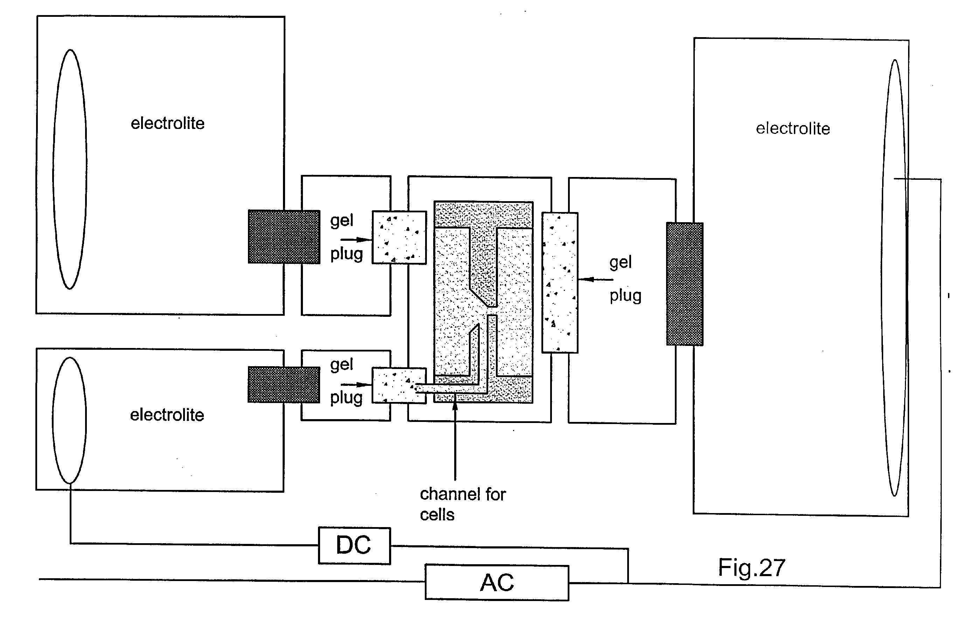

Fig. 27: Separation chamber for cells

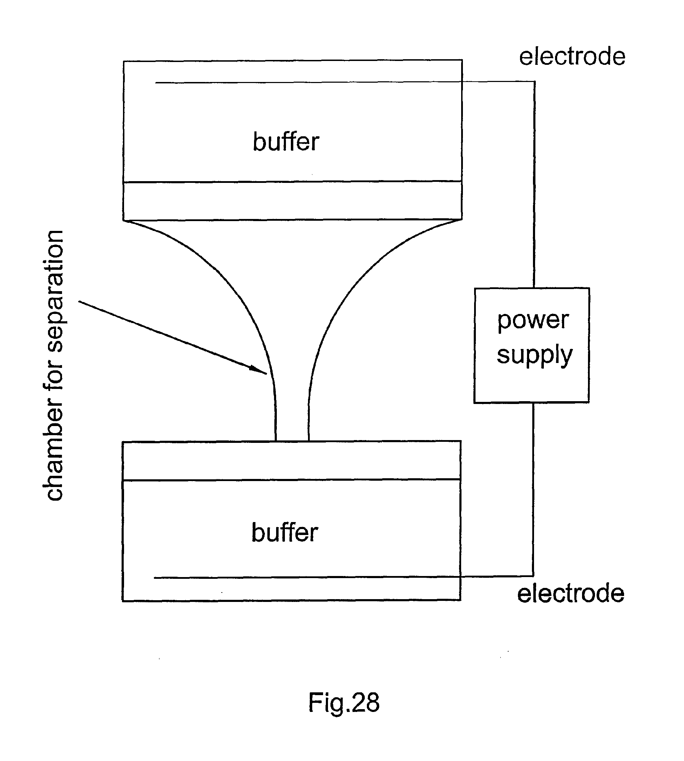

Fig. 28: Example of hyperbolic chamber for cell separation.

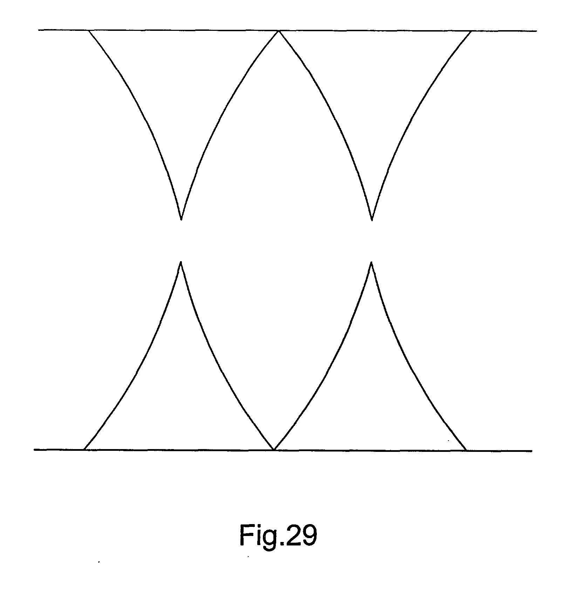

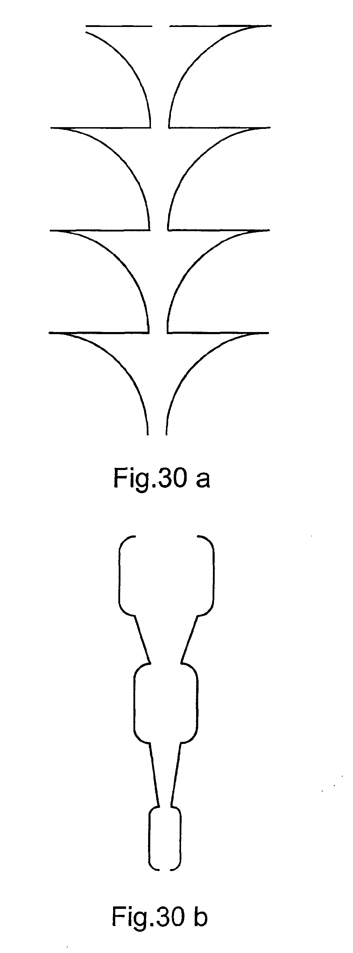

Fig. 29: Double triangular wedge for cell separation.

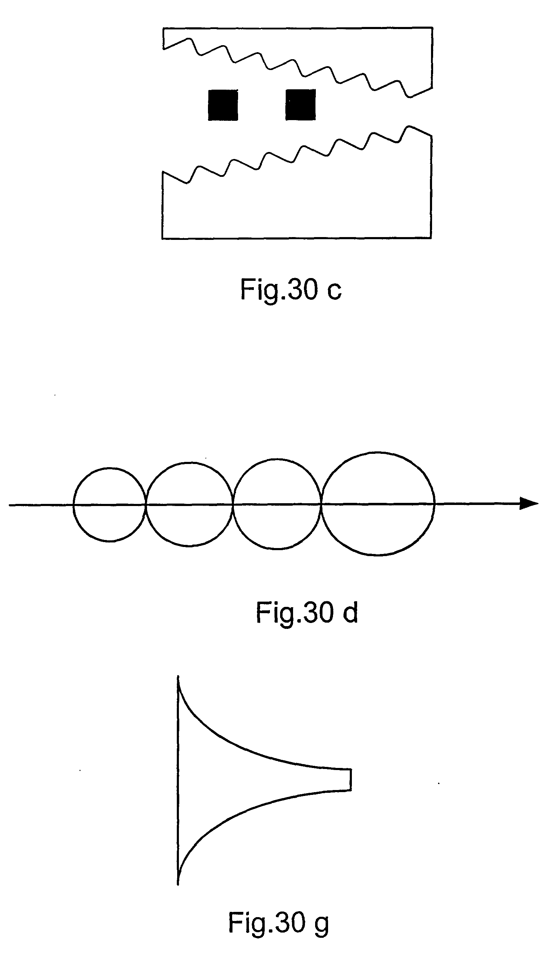

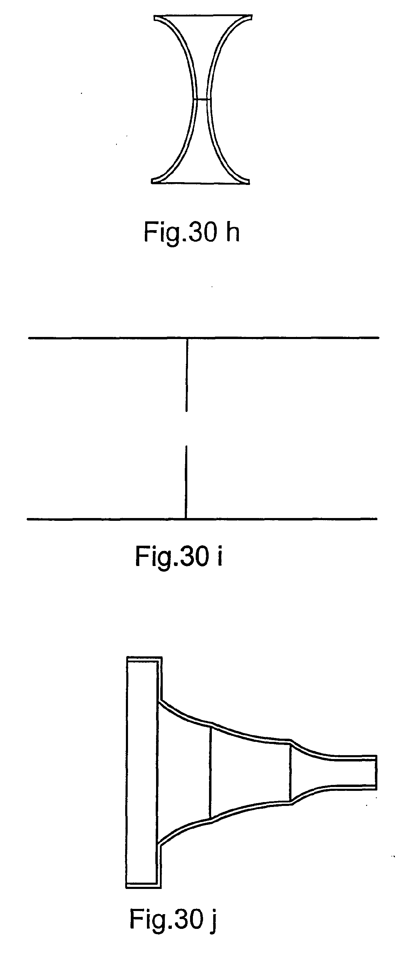

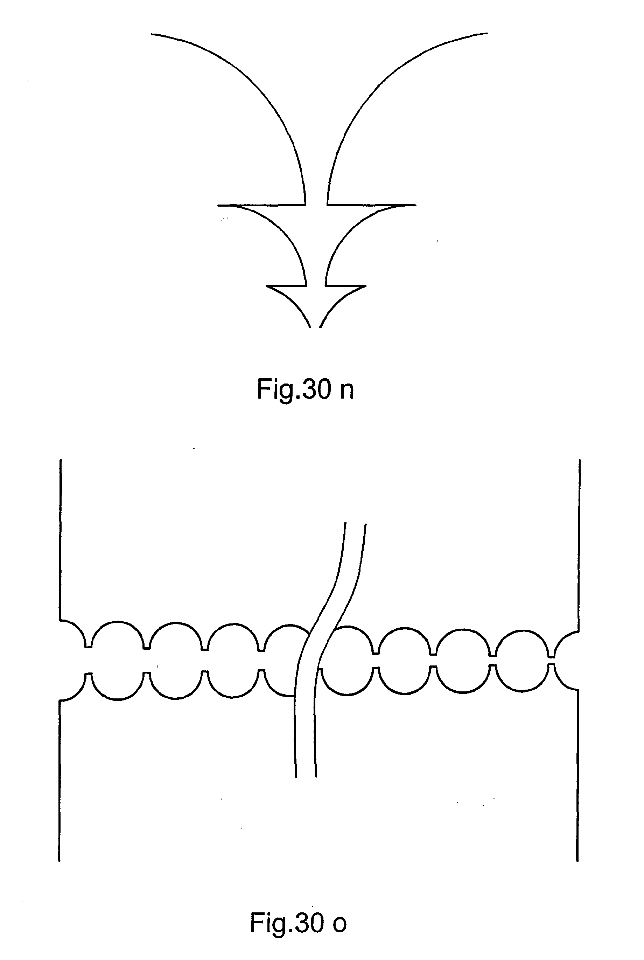

Fig. 30(a-o): Examples of variable cross-section separation chambers

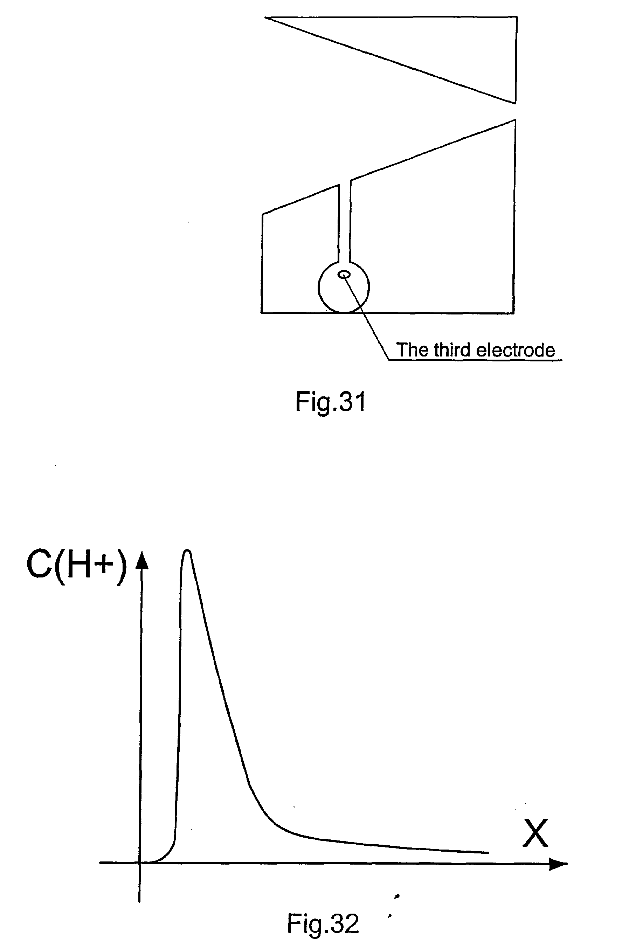

Fig. 31: System for fast extraction of separated fractions. The system includes special channels for extraction.

Fig. 32: Schematic shape of traveling concentration wave (dependence of concentration on coordinate)

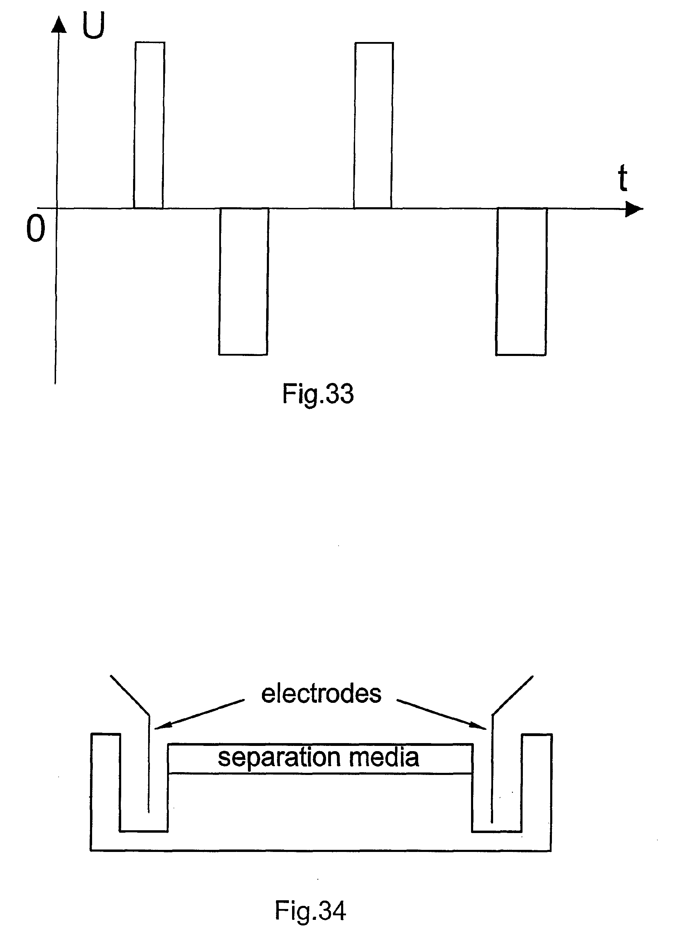

Fig. 33: Type of electric signal for traveling concentration wave separation.

Fig. 34: Separation cell for traveling concentration wave separation

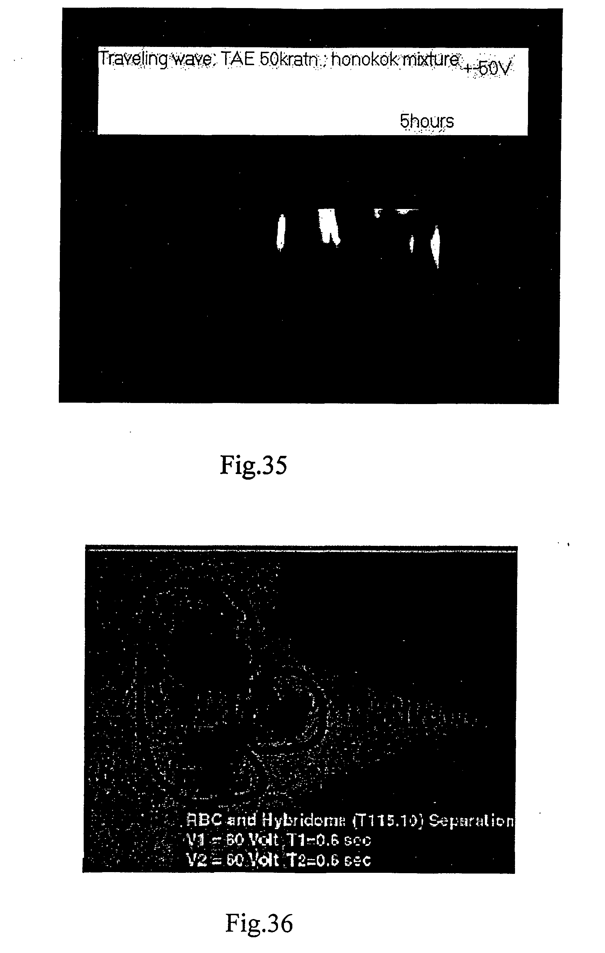

Fig. 35: Result of traveling concentration wave separation of gonococcus bacteria.

( ±50V)

Fig. 36:    Traveling concentration wave separation of RBC.

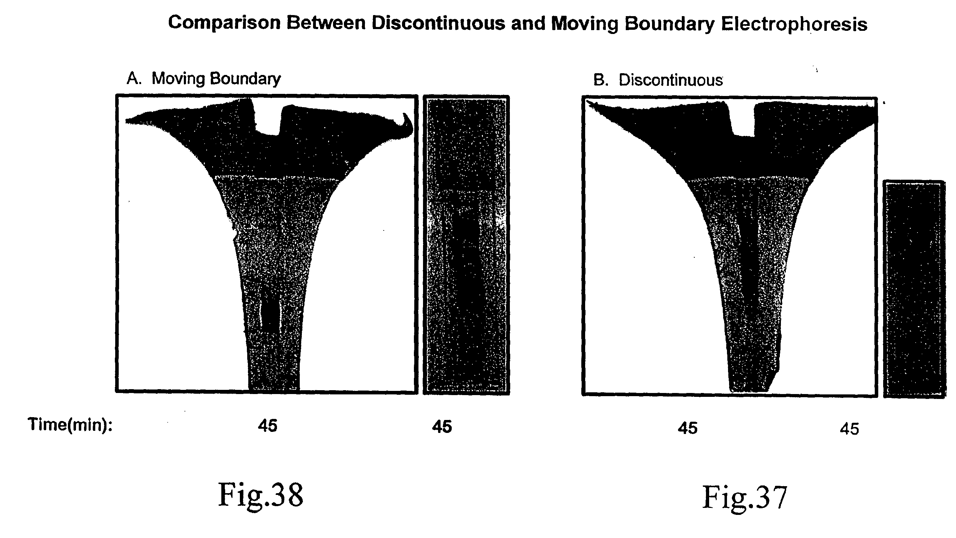

Fig. 37:    Separation of Monoclonal Antibodies. (5μg). A. Separation by moving boundary electrophoresis according to the invention (left panel) and regular (right panel) gel systems. Electrophoresis was preformed with 4W and 3W according to the invention and regular gels, respectively. Gel (upper gel 3 % T, lower gel 7.5 % T) and anolyte included 10 mM Imidazole-HCl, pH 7, 75 mM boric acid-KOH, pH 9.23 was used for the catholyte.

Fig. 38:    Moving boundary method separation. Separation by discontinuous polyacrylamide gel electrophoresis in both the invention (left panel) and regular (right panel) gel systems. Electrophoreses was preformed under constant power, 4W for gels of the invention and 3W for regular gels. Running and gel buffers included 10 mM imidazole-glycine, pH 7.

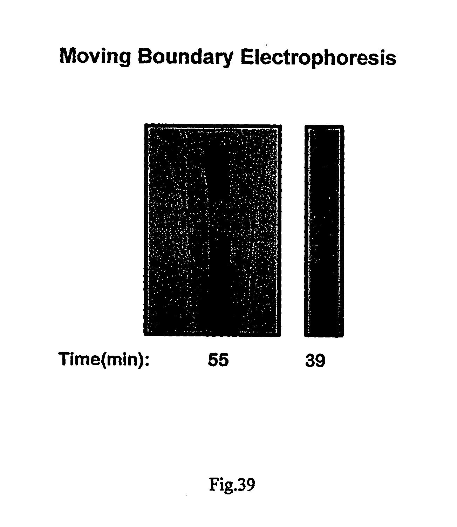

Fig. 39:    Moving boundary electrophoresis was used to separate human plasma. A comparison between rectangular and wedge shaped geometry under similar electrophoresis conditions shows that the protein bands in the shaped wedge are more distinct and more proteins can be visualized. Separation by moving boundary electrophoresis: the invention (left panel) and regular (right panel) gel systems. Electrophoresis was preformed under 4W and 3W for gels of the invention and regular gels, respectively. Upper gel (3 % T) included 15 mM Imidazole-HCl, pH 7 lower gel (7.5 % T) and anolyte were made with 15 mM Imidazole-0.1 M boric acid, pH 7. 0.1 M Boric acid-KOH, pH 9.23 was used as the catholyte. Time of electrophoresis was determined so proteins will migrate to similar positions in the two gels.

Fig. 40:    RBC concentrate near the "hole", when a variable signal is applied .

The method of the invention is a method for moving isolating and/or identifying particles in a sample by placing said sample in a spatially varying electrical field wherein the spatially varying electrical field is following a mathematical non-monotonous function, selected from the group consisting of linear, hyperbolic, parabolic functions, $y \sim x^{p/q}$ and combinations and/or substitutions thereof wherein p and q are integers. Preferably, the non-monotonous function is a function, which is non-symmetric with respect to an extremum. For example, the embodiments of Fig. 41 or 45 show a device, which realizes the spatially varying electrical field according to a non-monotonous function having an asymmetry with respect to an extremum.

Another aspect of the present invention is a device for performing separations and/or electrophoresis according to the method of the invention. This device has a first end portion and a second end portion and a varying cross-section between the first and second end portion, wherein the cross-section is varying according to a non-monotonous function and the non-monotonous function is asymmetric with respect to the mid-plane between the first end portion and the second end portion. Typical embodiments of the device are shown in Fig. 41 and Fig. 44.

A further device for performing the method of the invention is having a first end portion and a second end portion and a varying cross-section between the first and second end portion, wherein at least one projection of the cross-section is varying according to a non-monotonous function and a non-monotonous function is asymmetric with respect to the mid-plane between the first end portion and the second end portion. Examples of this type of device are also depicted in Fig. 41 and 44.

Further, the method of the invention can be performed in a separation and/or electrophoresis medium with varying cross section or projection of at least one cross section wherein the varying cross section or the at least one projection of the cross section follows a smooth envelope consisting of a discrete set of a least two step-wise or piece-wise constant sections or functions, linear or spatially varying monotonous or non-monotonous functions.

This device can also be considered as a separation or electrophoresis device comprising at least one first sub unit and at least one second sub unit, the at least one first and at least one second sub unit having a substantially constant cross-section and the cross-section of the at least one first sub unit is different to the at least one second sub unit. In a preferred embodiment of such a device, the at least first and at least second sub unit are arranged in a plurality and the shape of the arrangement of the sub units follows a smooth envelope consisting of a discrete set of step-wise or piece-wise constant functions or sections, linear or spatially varying monotonous or non-monotonous functions.

Furthermore, the method of the invention can be performed in a separation and/or electrophoresis device having a first end portion and a second end portion and a varying cross section between the first and second end portions wherein the cross section or an at least one projection of the cross section is following a smooth envelope consisting of a discrete set of a least two step-wise or piece-wise constant sections or functions, linear or spatially varying monotonous or non-monotonous functions.

A typical embodiment of this device is depicted in Fig. 44. Another embodiment of this device is shown in Fig. 47. This device has a substantially elongated first sub unit ending in a tapered second sub unit yielding a trombone-like structure or silhouette. In particular, the tapered second sub unit is at the cathodic side of an electrophoresis device. This creates a long monotonous or constant cross section part and a short monotonous part, having a common narrow cross section; the long part is used to separate the bio-molecules, whereas the short part serves to smoothly taper out the end conditions of the long monotonous part. Preferably, this method is performed in a medium wherein the medium is a tapered immobiline or ampholine strip. This method is advantageous because it reduces the electric field strength near the cathodic end of the electrophoresis minimizing cathodic drift effects and other disturbances, potentially increasing the operative pH span of the ampholine and immobiline strips.A further realization of the method according to the invention is an electrophoresis medium having a first end portion and a second end portion having a thickness varying in a direction from the first end portion towards the second end portion. The variation of thickness follows monotonous hyperbolic, parabolic functions or $y \sim x^{p/q}$ and combinations and/or substitutions thereof or non-monotonous functions of the type of linear, hyperbolic, parabolic functions or $y \sim x^{p/q}$ and combinations and/or substitutions thereof or is following a smooth envelope consisting of a discrete set of a least two step-wise or piece-wise constant sections or functions, linear or spatially varying monotonous or non-monotonous functions.A typical example for such an electrophoresis medium within a separation chamber is shown in Fig. 46. The advantage of this embodiment is that it incorporates wedge-like advantages as discussed in PCT/IB 00/723 but in addition allows for running multiple lanes comprising different or identical samples in an electrophoresis in a simultaneous manner. Specifically, electric field gradients and temperature distributions are now created within the geometry in a way permitting running multiple lanes simultaneously.

Another aspect of the invention is a device for 2D-electrophoresis,which is known to the skilled person. This device is suitable for isoelectric focusing of samples along a first dimension, in particular for biopolymers such as proteins, and by simply changing the orientation of the electric field a separation according to a different principle can be performed in a substantially orthogonal direction to the first separation. In particular, the device is suitable for performing common 2-D electrophoresis in which in the first dimension separation is performed according to the pI of the bio-molecules and in the second dimension separation according to mass is performed, as well-known in the art, e.g. as in SDS-PAGE. In that case before operating the second dimension, SDS is added. The device comprises a first end portion and a second end portion and a varying cross-section between the first and the second portion, wherein the cross-sections are varying according to monotonous or non-monotonous function and at least one channel is arranged substantially perpendicular to a direction of the first dimension of the electric field applied for the first dimension run of the 2D electrophoresis. Typical embodiments of this device are shown in Fig. 48a - 48e. The curved side according to Fig. 48a follows a mathematical function, which is monotonous or non-monotonous. In Fig. 48a a specific monotonous continually varying function is shown.

In Fig. 48b in the particular curved medium channels are placed perpendicular to the direction of the electrophoresis of the first dimension. When applying an electrical field in the direction of the first separation in the curved shaped separation medium of Fig. 48b, a temperature distribution is established, which may generate a pH-gradient both substantially in the same direction as the electric field applied in the first dimension. Due to their isoelectric point substances in the sample to be separated are focused at locations where their isoelectric point substantially equals the pH of the environment. After having performed the first dimension electrophoresis in the pH-gradient an electrophoresis is performed substantially perpendicular to the first direction. The method and device combine two distinct mechanisms for moving, separating, purifying and/or identifying of a sample without mechanically disjoining at least one component of the assembly, except for the electrodes. This has particular advantages when substantially the same media, buffers, electrolytes are used.

It becomes evident that the number of channels can be chosen by the skilled person depending on the grade of resolution and quality of separation to be achieved.

According to the invention also a method for separating biopolymers is disclosed, for example biopolymers such as DNA, wherein these molecules are separated with impulse electrophoresis using a separation medium having a first end portion and a second end portion and an continually varying cross-section. According to the method of the invention the first end portion has a larger cross-section than the second end portion and a sample is applied at the second end portion. The electrophoresis is performed from the second to the first end portion and the resonance time is selected to be longer than periods of the signal.

This method prefers a ratio of the cross-section of the wider end portion and the narrower end portion in a range of about 3.

This embodiment is advantageous since it avoids the so-called band inversion when separating large biomolecules. A further advantage is the relatively short separation time, even for relatively large DNA fractions.

Fig. 41 shows an electrophoresis gel slab construction 10 consisting of gel slab 11 enclosed by non-monotonous wedges bounded by spacers 12 with a boundary function of the class disclosed, enclosed between two glass plates 13. Although the gel slab shown here has end portions of different width, they can be identical (2D projection of the gel geometry is shown in the following figures). The arrow indicates the orientation of electrophoresis (not necessarily the direction of the separation. This embodiment shows substantially equal thickness. Without the end-taper at the narrow end portion the temperature will be significantly higher than that of temperature in the surrounding thermostat. This leads to steep temperature gradients near the end portion of the separation medium, which can disturb the separation process. To circumvent this problem smooth tapering out of the narrow (separation) section to a wider section is beneficial.

Fig. 42 shows the projection of a slab separation medium 11 defined by consecutive slices of constant cross-section. The smooth monotonous envelope of this wedge 12 is according any of the functions, specifically a non-linear function. The arrow indicates the orientation of electrophoresis (not necessarily the direction of the separation. The abrupt field jumps as well as the temperature jumps act as shock fronts. Particles that want to continue their motion experience a threshold which they cannot simply overcome; therefore compression of their fractions occurs. In addition, such a structure has the advantage of having sections of substantially constant electrical and thermal properties.

Fig. 43 shows a projection of a slab separation medium 11 defined by consecutive pieces of constant cross-sections. The smooth monotonous envelope of this wedge 12 is according to a linear function. The arrow indicates the orientation of electrophoresis (not necessarily the direction of the separation).

Fig. 44 shows a projection of a slab separation medium 11 defined by non-monotonous wedges 12 (i. e. "double wedge") the boundaries of which have a monotonous envelope, according to any of the functions, specifically shown a nonlinear function, consisting of consecutive sets of rectangular sections with a smooth envelope and a monotonous second wedge also according to any of the specified functions. The arrow indicates the orientation of electrophoresis (not necessarily the direction of the separation). It is important to keep in mind that, as before, the non-monotonous wedge is a single unit that cannot be considered to consist of a combination of more than one unit. This embodiment combines the advantages of Fig. 43 and 44.

Fig. 45 shows an electrophoresis performed in a double wedge, according to the principle of Fig. 44. The first wedge is a step-wise wedge with a linear envelope. The second wedge is according to a hyperbolic function. Plasma was separated in a 5 % polyacrylamide gel during a run of 4 h in a 2x tris-glycine buffer wit 8M urea. The applied voltage was 1000 V. The maximum temperature difference was about 10 °C.

Fig. 46 shows a double wedge according to any of the functions in a configuration that permits running multiple lanes simultaneously. The separation medium 11 has a constant width; its cross section varies through the spatially varying height (thickness). The arrow indicates the orientation of electrophoresis. Although, only one glass support is shown, two bounding materials are possible. Furthermore, the cross-section varies in a non symmetric manner with respect to the wedge boundaries (double wedge on one side versus flat support on the other). Specifically, electric field gradients and temperature distributions are now created within the geometry in a way permitting running multiple lanes simultaneously.

Fig. 47 shows another embodiment of a separation gel according to the invention suitable for performing isoelectric focusing.

Fig. 48 shows various embodiments of a 2D-electrophoresis device.

The following is the text of the PCT/IB 00/00723 and serves illustrating other embodiments, which can be performed with the method and devices of the present invention.

PCT/IB 00/00723 discloses an electrophoretic and dielectrophoretic separation technique and system for improved separation and manipulation of bioparticles in an extended range of sizes, isoelectric points and shapes. More specifically particles can be separated according to their mass, density, internal and surface charge distribution, shape and dielectric properties.

Further PCT/IB 00/00723 discloses an electrophoresis technique by applying electric fields for manipulating higher orders of the mobility to enhance the resolution of separation of biomolecules, such as DNA and to extend the sizes of the biomolecules such as DNA, which can be separated. In other embodiments methods of separation and sorting of biomolecules such as proteins, chromosomes, cells and cell fragments are disclosed.

According to PCT/IB 00/00723 the method for moving, isolating and/or identifying particles in a sample by placing said sample in a spatially varied electrical field wherein the spatially varied electrical field is following a mathematical function selected from the group consisting of linear, hyperbolic, parabolic functions, $y \sim x^{-1/2}$ and combinations thereof.

The spatially varied electrical field is achieved by varying the cross-section area of the medium substantially normal to the direction of the electrical field.

In particular the mathematical functions designing the electrical field are following combinations of linear, hyperbolic, parabolic functions obtained by linear combinations, multiplications and/or divisions of said functions.

The medium may be limited by limitation means having a shape of two converging hyperbolas.

Based on electric current conservation law, the local electric field at each point along the separation medium is inversely proportional to the cross section of the medium and a multitude of spatially varied electric fields can be generated by designing the shape of the medium or medium enclosing vessel. The electric field profile is exists between at least two electrodes placed at the ends of the separation vessel and in electrical contact with the separation medium by applying a voltage to the electrodes. Preferably at least two separation media having different dielectric or conductivity properties are combined.

By this method either in a constant cross section vessel or medium or variable cross section vessel a desired electric field distribution is obtained by applying a voltage to electrodes in contact with the medium.

In another preferred embodiment of PCT/IB 00/00723 the spatially varying electrical field is achieved by a multielectrode arrangement and the potential between two adjacent electrodes along the medium is different.

By this method a desired field (shape) distribution is obtained either in a constant cross section vessel or medium or variable cross section medium or vessel, in a single medium or multiple media, and this by inserting into the medium at least one additional electrode along the medium and supplying separate voltages to each electrode pair.

In particular the medium comprises a fluidum such as a gel, a liquid, a solid matrix. Each of these are selected by their electric conductivity and dielectric properties and are applicable for the generation of a particular electric field pattern and particular separation procedure as desired.

Preferably, the electric field is designed (changed) in a stepwise form from high field to low field to obtain initial focusing and compression of the fractions, this by causing the advancing (particles) molecules in the fractions to slow down when crossing the field step while the trailing particles are moving fast in the high field region.

According to PCT/IB 00/00723 a steep field jump (drop) is preferred in the transition region between two gel segments, with different electrical properties. By joining two types of gels or other separation media possessing different conductivity properties and applying a voltage perpendicularly to the boarder line between the two gels a desired field step is produced.

The method of PCT/IB 00/00723 allows for separating larger particles from smaller particles when dispersed in a medium by applying a non-uniform electric field across the medium,

a) such that different particles will move in opposite directions or
b) large particles move faster than small particles or vice versa.

The method allows for a separation of particles according to their electrical properties such that particles of identical size but different consistency e.g. structure, conformation and the like, both for different size particles and same size particles for separating different particles, the method refers to the following steps:

- suspending the particles to be separated in medium such as a gel or other conductive medium, wherein the medium has a variable cross section geometry,
- generating and applying a non-uniform electric field across or along the medium causing the particles to travel through the medium according to their electrical properties in the medium.

It can be advantageous to vary the electrical field in a time dependent manner, e.g. periodically for focusing, i.e. immobilization of specific particles in the separation medium at a fixed location along the medium. By this embodiment it is possible to separate specific fractions of particles at predetermined positions along the separation media for further analysis or processing.

Preferably the spatially varied electrical field is achieved by producing a complex separation sequence and media by generating a continuous path of a medium such as a separation gel made up from segments with different electrical properties and/or cross section area and by applying different electric potentials to each segment or by generating different electric fields in each segment. This is achieved either by placing the separation media such as a gel between two metal electrodes inserted at both ends of the media and by applying a constant or time varying voltage or by placing metal electrodes in each of the segments and supplying different voltages to each electrode.

The non-uniform electric field is generated in e.g. a capillary, which e.g. is filled with segments of separation media such as gels with different electric properties.

By this method a field pattern consisting of regions with different field intensity is created upon applying an electric voltage along the capillary and by this way improved manipulation and separation can be achieved like fraction narrowing, lowering the operational voltage and shortening the separation length. The non-uniform field may be generated by segments of polymer tubes or inserts with different diameter or varying internal diameter. By this way of designing the shape of the internal surface of the insert a variety of non-uniform field patterns are obtained along the capillary, these fields enabling separation and transport of particles for the elucidation of particular electrical properties of the specific particle.

PCT/IB 00/00723 discloses a capillary produced with a variable cross section to obtain a non-uniform electric field distribution in the separation media along the capillary. Advantageously, the non polymerized gel is applied to the surface of the substrate by means of a special pen-like dispenser filled with gel, the pen being a part of a plotter operated by a special software. By this embodiment capillary-like segments are produced having varying cross section area(s) and which are shaped to obtain a particular field distribution along the segment.

The gel sequence may also be assembled from segments of gel cut to a special shape for example by a software driven cutting machine.

The capillary sized segments can be also produced by machining shaped channels in a suitable substrate like glass, PMMA or others by a known machining method like etching or laser machining or others. By inserting metal electrodes at suitable locations, e.g. at the ends of these segments and applying voltage from a power supply a particular separation procedure is obtained. By combining at least two different segments and by applying a multiplicity of voltages to different segments a complex separation and manipulation method can be designed. Preferably, the medium for separation according to the invention is arranged on a chip to form a microfluidic system. Capillary electrophoresis and dielectrophoresis in which several segments filled with at least one separation medium are combined and by applying voltages to each segment complex manipulation and reaction procedures are conducted.

Subject matter of PCT/IB 00/00723 is also a separation medium having a first end portion and a second end portion and a continually varying cross-section wherein the first end portion has a larger cross-section than the second end portion.

The separation medium of the invention comprises a continually varying cross-section according to a hyperbolic function.

The separation medium preferably is arranged in a means for supporting the medium such as glass plates, wedges, and the like.

A further embodiment of PCT/IB 00/00723 concerns a capillary having a first end portion and a second end portion and a continually varying cross-section wherein the first end portion has a larger cross-section than the second end portion to form a tapered capillary according to any nonlinear function. Also in this embodiment it is preferred that the capillary comprises a continually varying cross-section according to a hyperbolic function.

The separation media of the invention can be combined in order to form an assembly of at least two capillaries, wherein the second end portion of a first capillary is directed towards the first end portion of a second capillary.

Preferably, in this assembly the at least two capillaries are tightly joined to each other.

The capillary or the assembly may be filled with a separation medium such as a gel.

The capillary or the assembly are preferably manufactured of inert material such as glass or artificial resins such as polymethylmethacrylates PMMA and the like.

The PCT/IB 00/00723 further discloses an electrophoresis apparatus for performing the described method. The apparatus is comprising a first electrode means comprising a cathode and an anode, means for supplying a non-uniform and/or time dependent, in particular periodical, electric fields and a separation medium preferably a separation medium of the invention, such as a gel, means for supporting the medium in a geometry of varying cross-section during use of the apparatus, the anode and cathode are disposed at respective opposed edges of the separation medium to produce a polarity electric field in the plane of the separation medium. The apparatus comprises means for applying designed electrical fields to the electrode means, and in particular additionally at least one reference electrode.

Further advantageous embodiments are achieved by combining the method of PCT/IB 00/00723 with other electrophoretic methods, such as temperature gradient electrophoresis.

The electric current flowing through a variable cross section cell filled with separation medium will cause spatially varying Joule heating along the separation chamber and temperature gradients will be generated. These temperature gradients together with the non homogenous electric field can be utilised for further embodiments like for example the separation of proteins by isoelectric focusing in a pH gradient.

For example a rectangular cross section separation vessel with the outer borders shaped as a hyperbola will generate a linear electric field variation and a parabolic temperature dependence along the separation vessel. Such a temperature dependence will create a parabolic pH variation and will enable the separation of proteins in the pH interval, and vice-versa.

Separation of DNA

In the following the method for separating DNA will be illustrated in greater detail.

The PCT/IB 00/00723 discloses an electrophoresis technique by applying electric fields for manipulating higher orders of the mobility to enhance the resolution of DNA and to extend the sizes of DNA, which can be separated. The Data show that a single DNA molecule moved in the electric field in a very sharp (Fig. 6) focused band relative to a control (Fig. 4), thus clearly improving the resolution power. The data also show that the separation and resolving power of the technique with a collection of various size pieces of DNA. PCT/IB 00/00723 discloses methods and apparatus for the separation and manipulation of molecules, in particular large fragments, which comprise the following: 1) the creation of virtual traps; 2) the generation of steep field steps by manipulations of gel medium composition for inverse focusing; and 3) the creation of geometric traps.

A typical electrophoresis apparatus is comprising a first electrode means consisting of a cathode and an anode and a means for inducing a non-uniform and in particular time dependent (periodical) electric field, and gel retaining means suitable, in use, to retain a gel in a wedge geometry within said apparatus such that, in use, the said anode and said cathode are disposed at respective opposed edges of said retained gel to produce a polarity electric field in the plane of said retained gel.

As demonstrated herein, the results show that two main methods of focusing in non uniform field were: the method of focusing in a continuous field gradient; and the method of concentration dependent approach or "Start" method. The concentration dependent approach or "Start" method comprises the generation of a steep field jump by a proper selection of the electrical properties of at least two kinds of gels. The field jump when positioned at the start position of the electrophoresis cell causes a focusing (compression) of the fractions in the solution under analysis (Fig. 1).

In this experiment two segments of gel with different buffer concentration were used (TAE buffer with 10x higher concentration in one segments than in the second segment). This resulted in a conductivity ratio and consequently in a field ratio of 10x.

The concentration dependent approach is based on the principle that local changes in the conductivity of the gel will result in changes in the electric field. For example, if the supporting media (gel) consists of two sequentially located segments with different conductivity a non uniform electric field is formed on the segment boundary, when an electric potential is applied. By this means, by using gel segments prepared on the basis of buffers with different concentrations of electrolyte, different configurations of non uniform electric field may be formed. In doing so, standard buffer solutions can be applied near the electrodes. Since the dimensions of the transition region will be small in comparison with the length of the gel segments, the blurring caused by non uniform electrolyte concentration in gel, which is determined by diffusion, will be negligible. This method is useful for improved focusing and resolution in DNA separation.

The non-uniform field in the "start" method is formed by a concentration gradient of the buffer electrolyte. The concentration in the "start" region is about 10 times smaller than for the work region (0.004 M TAE and 0.04 M TAE accordingly). Because the conductivity of gel is defined only by the concentration of the buffer electrolyte, the conductivity of the "start" region will be 10 times smaller than in the other part of the gel. Since the total current does not change when it flows through the gel, as a result the electric field in the start region will be 10 times larger than in the other part of the gel. The geometry used in this method is a regular rectangular gel slab, as in usual regular electrophoresis, as shown in Fig. 21.

The parameters are: 2-electrodes(Pt) cell of length:23 cm, width:10 cm; buffer 0.04M (0.004M) tris-acetate (SIGMA, Inc.) + 0.002 M EDTA (SIGMA, Inc.); dye: Ethydium bromide (SIGMA, Inc.); agarose (Bio-Rad, mr=0.1); and voltage range: 20-150V.

In a continuous field gradient a strong longitudinal, nonuniform electric field is formed by a variable geometry or by a concentration gradient method through the whole length of the gel. The field in the wide part of a wedge is much smaller than in the narrow one. For example, if the separation gel is in the form of a wedge than the non-uniform electric field along the wedge will have a the wedge-like dependence. The method can be of interest in applications in the electrophoretic separation of fractions very different in size.

The subsequent experiments provided herein, consist of methods for the generation and design of electric field gradients for focusing in non-uniform fields. The development was completed with the experimental verification of the method in experiments on the focusing of fractions of fragments of the DNA marker: LAMBDA-HIND III hydrolizyte. The velocity changes proportionally to the intensity of the field. For example, see Fig. 22. The corresponding values of the nonlinear mobility of Lambda -Hind fragments are presented in Fig.8.

Virtual Traps:

PCT/IB 00/00723 discloses apparatus and methods for the electrophoretic separation of macromolecules based on nonlinear mobility effects, which can be incorporated in current methods of electric separation such as electrophoresis, electro-chromatography. The method simplifies the process of electrophoretic separation and enables separation without mechanical and chemical structuring of pH gradients in media (gels etc.) but by manipulation with non-uniform electric fields.

Nonlinear mobility electrophoresis in a non-uniform and time dependent (periodical) electric field is used for creating virtual traps for particles, like in the method of isoelectrical point (pI) focusing but without pH gradients.

PCT/IB 00/00723 describes an apparatus having a special designed electric signal applied to the electrodes of the separation cell. The time dependent electrical voltage V(t) (meander) is presented in Fig. 12.

The total duration of one period of meander is $T=T_1+T_2$, and the average voltage is $<V>=(V_1 T_1-V_2 T_2)/(T_1+T_2)$. The power supply gives Voltage $V_1$ and $V_2$ up to 210V with maximum current 100mA and provide time intervals from 400 sec to 1msec. Such PC-driven and electrically controlled electrophoretic device produces signals which must create virtual traps for the macromolecules in gel and have a number of advantages in comparison with the regular electrophoretic techniques. The advantages being higher resolution, higher sensitivity and the important ability of focusing the particles, which have a nonlinear mobility. The nonlinear effect is closely connected with the secondary structure of macromolecules. As a result nonlinear mobility focusing gives an instrument for investigations of secondary structures of macromolecules. A comparison of regular electrophoresis and nonlinear electrophoresis is presented in the 2 dimensional gel electrophoresis presented in Fig. 11.

The coefficient of nonlinear mobility includes dipole and quadrupole moments. By accounting for these moments special "traps" can be designed whereby the separation only according to dipole moment or only according to quadrupole moment is possible.

Special types of electrophoresis cells with two working electrodes and two reference electrodes have been constructed for the generation of non-uniform electric fields, which result in nonlinear mobility focusing. Analytical complex functions depend on the shape of the electrophoretic cells. As provided herein as examples, two forms of gel slab have been considered: the simple planar wedge and the hyperbolic wedge (Hyperwedge). The parameters of a wedge (length L and the start and end crossection H1 and H2, in couple with voltage parameters $V_1$, $T_1$, $V_2$, $T_2$ are determining nonlinear mobility focusing. As an example in the case of zero average voltage $<V>=0$, all fractions are focusing in the same point, corresponding to maximum crosssection of the wedge. Also if the average voltage $<V>$ is greater than a critical value, no focusing will be appear in the gel region.

GENERAL PRINCIPLE FOR ELECTRIC SIGNAL (MEANDER) (Fig. 12):

    1) Assymetric square voltage waveforms $T_1 \neq T_2$ and $V_1 \neq V_2$

    2) Choice of optimum values for $V_1 T_1$ and $V_2 T_2$

    3) Gradient of electric field

    4) A preferable condition for the method for separation is the use of a power supply with stabilization on current and voltage (potentiostat & galvanostat devices)

For the creation of non-homogeneous electric fields (and field gradient) the different kinds of wedges (hyperbolic, linear) are proposed.

A hyperbola is described by formula y=a/x . Hyperwedges are cut from a gel with coefficient of a. The choice of wedge's type depended on separated macromolecules mixture (there are no universal wedge sizes).

    Range for V1- (-500V, 0V)

    Range for V2 - (0V, 500V)

    Range for T1&T2: (1sec, 1000sec)

Inverse Focusing ("START" Method)

This method provides for improved focusing and resolution of the separated molecules. The method comprises a particular case of conductivity dependent, non-uniform field electrophoresis and is based on the generation of a steep field jump by the proper selection of the electrical properties of two kinds of gels with different conductivity. Application of an electric voltage as in regular electrophoresis to a bi-layer of two gels will produce a field jump (see Fig. 1 & 25). The field jump when positioned at the start position of the electrophoresis cell will cause a compression of the fractions in the analyzed solution. The subsequent electrophoresis process will separate the fractions with improved resolution.

Geometrical Traps:

In addition, the present invention provides a method of separation of macromolecules in a medium using non-uniform electric fields based on the design of geometrical features of the electrophoretic medium. The specific details of the design of geometric traps consist of choosing the geometry of the electrophoretic cell. Consider the two-dimensional geometry of a cell, where the cross section of the cell, S, is changed along the x coordinate, S=S(x). Because the total current J is constant in all cross sections, and proportional to ES(x) ($J \sim ES(x)$ = const), one obtains an electrical field changing along the cell:

$$E \sim S^{-1}(x) \qquad (1)$$

Consider the drift velocity of a charged particle under the applied field strength E(x):

$$U_d = bE(x) = U_d(x) \qquad (2)$$

Where b is the mobility of the particle, and has a weak nonlinearity with respect to the electric field strength E in most common cases. As a result, the drift velocity for different fractions varies more than in the regular electrophoresis process. By changing the geometry of the cell one obtains more separation abilities compared to the regular electrophoresis.

Fig. 2 corresponds to a hyperbolically changing cross section area $S(x) \sim x^{-1}$, which results in a linear dependence for the electrical field strength, $E \sim const \cdot x$.

Fig. 3 shows an electropherogram of fragments of hydrolyzed DNA lambda phage HIND III in a hyperwedge filled with a 0.6% agarose gel. Voltage 20 V.

In the hyperbolic geometry all small fractions of macromolecules stop at the wide end of the vessel due to the falling off of the field strength. This effect we call "the geometric trap". The shape of the cell is calculated by accounting for the properties of the gel and by using methods of conformal mapping based on the expression (1) and (2). For a standard separation process a set of vessels can be designed and manufactured.

Another embodiment is based on a set of basic shapes and constructs the optimal configuration by a modular like assembly. The schematic result of geometric fraction trapping is show in Fig. 16 and 20.

Fig. 17 presents schematic results of the electrophoretic separation of fractions of macromolecules. The result of the application of the geometric traps is a higher uniformity in the fractionation. This feature is very useful for the case of high weight differences of the sample fractions.

Hyperwedge Focusing:

In the hyperwedge the electric potential V(x,y) and field strength E are defined by potential gradient according to the following expressions (Fig. 2):

$$V(x,y) = -V(t)(x^2-y^2)/L^2 \qquad (1)$$

$$E_x = 2xV(t)/L^2, \qquad E_y = 2yV(t)/L^2 \qquad (2)$$

Where V(t) is the effective voltage on the gel and L is the length of the hyperwedge segment. The x component of the electric field is changed linearly along the wedge. The availability of the y-component of the field tends to stretch the fractions across the wedge's symmetry axis but in the vicinity of symmetry axis (y=0) the y-component is small. It is interesting to note that Ex does not depend on the y-coordinate, what generates straight line fraction fronts with the electrophoresis in the hyperwedge.

The focusing properties of the hyperwedge are symmetric relative to the symmetry axis therefor one hyperwedge can be used for two independent separation procedures.

Impulse Field (meander):

Reference is now made to Fig. 12, during the field $E_1$ action the macromolecule drifts along the axis X and under the action of the weak field $E_2$ operating for a more extended time T2 it is shifted in the reverse direction.

The gel tank is preferably of conventional design comprising an open-topped rectangular box made of an electrically insulating material such as glass, Plexiglass or Perspex. Said gel tank is filled with an electrophoresis buffer solution. Preferably the electrophoresis buffer solution is a conventional electrophoresis buffer solution. Advantageously, said gel tank is provided with means for circulating, and thermostatically controlling the temperature of, said buffer solution. Said retained gel may consist of any electrophoretic gel capable of allowing transport of large molecules. Typically said retained gel is an agarose gel. Agarose gels are typically cast between glass plates with sample wells formed by insertion of a well former in the cassette before said agarose gel solidifies. Samples of molecules for electrophoresis may be loaded onto said agarose gel in agarose blocks before immersing said agarose gel in said buffer solution. Alternatively, said samples may be loaded onto said agarose gel as solutions after immersing said agarose gel in said buffer solution. Said gel retaining means may comprise any conventional means for retaining and supporting said retained gel in said gel tank. US-A-4,737,252, US-A-4,473,452, US-A-5,167,784, US-A-5,495,519, US-A-5,135,628, Monthony et al. US-A-3,948,743; Delony et al. US-A-4,574,040; Cantor et al. US-A-4,861,448; Hochstrasser; US-A-4,874,490; Kushner et al. US-A-4,954,236; Fernwood et al. US-A-4,994,166; Chu et al. US-A-5,073,246, and US-A-5, 167,790 and US-A-5,453,162, are incorporated by reference.

In one embodiment the gel is retained in the form of a wedge geometry having the following dimensions 13 cm in length, 10 cm in width and 0-4.4 cm in height. The hyperbolic wedge shape is shown in Fig. 2.

In general a wide variety of sizes and dimensions with varying narrow/wide aspect ratio wedges have been employed with wedge lengths from 100 μm up to 500 millimeter.

Optionally, said retained gel may be additionally secured and supported by removable glass bars adjacent the respective vertical edges of said retained gel. If said retained gel is an agarose gel it must be retained in position against the natural buoyancy of said agarose gel in said buffer solution. Said means for supplying the a non-uniform and time dependent (periodical) electric field between said cathode and said anode may consist of a conventional power source, typically with a maximum output between 300 mA, 150 V and 2.5 A, 500 V. Said means for supplying an alternating polarity potential difference to said electrodes may consist of a conventional power source, typically with a maximum output between 300 mA, 150 V and 2.5 A, 500 V, in conjunction with a switching unit capable of alternating the polarity of the potential difference, supplied by said power source, with a pulse time of between 0.1 seconds and at least 5000 seconds. Preferably, the switching unit is capable of alternating the polarity of the potential difference with a pulse time of between 60 seconds and 60 minutes. Optionally, both said power sources may be the same power source. Preferably, said means for supplying an alternating polarity potential difference comprises a power source and an electronic switching unit capable of supplying and ramping an alternating polarity potential difference with a pulse time of between 0.1 seconds and at least 5000 seconds, more preferably, between 60 seconds and 60 minutes. In one preferred embodiment the pulse time is 5 to 15 seconds and 20-90 V.

The material of construction of said anode, cathode and electrodes may be any suitable electrically conducting material, such as platinum or graphite. Preferably said anode, cathode and electrodes are platinum.

As presented in Fig. 14, there is shown a schematic drawing of a standard electrophoresis apparatus 10 having a power supply 12, an electrophoresis gel system including the tank 85 and a means 42 connected together for controlling the electric field force, electric field angle and the pulse duration to resolve DNA molecules greater than 1,000 kb in length along straight, unbent lanes within a gel. The electrophoresis system 10 permits adjustment of the field period and voltage. The electrophoresis gel system includes the shallow electrophoresis tank 85 which is made out of insulating material adapted to contain electrolyte buffer 86. Completely submerged in this buffer is a square sheet of agarose gel 90 containing a number of wells or oval depressions 91. In these wells are plugs of gel containing mixed DNA to be separated. To create the field in the gel separating system, electrodes 71 through 82 provide electrical contact to the buffer from the power supply 12 through the switching means 42. The electrodes are preferably made of an inert metal such as platinum.

The electrophoresis system of Fig. 15 is illustrated by a series of interconnected components comprising an electrophoresis chamber or gel box 10, a pump 11, a heat exchanger 12, a switching means 13, a DC regulated power supply 14 and a timing device 15. In the schematic diagram of Fig. 15, a top view of the gel box is illustrated in which the gel layer or slab is hyperbolic in geometry 16. The longer arrow and larger polarity signs (+ and -) indicate the predominant condition. That is, in variations in which a net migration is achieved by applying the same voltage in both directions, the predominant condition is one that is applied for the larger fraction of time of each switching cycle; in variations in which different voltages are applied for the same interval, the predominant condition would be the higher voltage. The usual convention of arrows pointing from + to - signifying the electrical-field (E) is employed in the figures. Because most macromolecules, including DNA, are negatively charged, under electrophoresis the direction of migration is in the opposite direction of the large arrows. The gel box comprises a generally rectangular sided chamber having sidewall 20, endwalls 22 and 23, base portions 24 and 25 anda front sidewall which would lie opposite the rear sidewall 20. The gel box is further provided with a raised platform or tray 28 in a plane below the top of the gel box and supported at opposite ends by partition walls 26 and 27. This platform serves as a support for the gel layer 16. The side-, end-, and partition-walls at each end of the gel box also form buffer chambers in an amount sufficient to cover the gel layer as shown by the buffer level 32. Electrodes 33 and 34 made of electrochemically inert material and having suitable electrical conducting properties, for example platinum, are provided for retention within the buffer chambers 30 and 31 respectively. They are preferably positioned along the endwalls at the bottom of the buffer chambers with electrical leads 35 and 36 for connection to the switching means 13. Tubing 37 and 38 with openings into buffer chambers 30 and 31, respectively, are provided for re-circulation of buffer from the gel box through a heat exchanger 12 by pump 11. The heat exchanger serves to dissipate heat generated within the gel box during electrophoresis. The cooling fluid source 39 for the heat exchanger can be provided by a conventional re-circulating, refrigerated water bath. The switching means 13 is critical to the provision of the periodic field-inversion of the gel electrophoresis. This system in essence can comprise power relay device. Fig. 23 is a circuit schematic that indicates the manner in which the power relay can be wired.

The power supply can be any suitable source of direct current. The apparatus is in a configuration that allows generating a non-uniform and time dependent (periodical) electric field at a constant applied voltage with a larger portion of the switching cycle devoted to forward migration than to reverse migration. In variations in which a higher voltage is applied in one direction than in the other, more complex electrical circuitry is required. For example, two power supplies can be employed, wired through separate power relays to independently programmable output circuits of the timing device.

Various components which can be used in the gel electrophoresis apparatus of this invention are commercially available. For example, gel electrophoresis chambers for use in the horizontal mode can be obtained from various sources such as Bethesda Research Laboratories (Gaithersburg, Md.) Model 144 Horizontal Gel System; Bio-Rad (Richmond, Calif.) Model 1405 and 1415 Electrophoresis Cells; Pharmacia (Uppsala, Sweden) FBE 3000 and GNA-200 Flatbed Cells; and the LKB (Bromma, Sweden) 2117 Multiphore II Electrophoresis Unit. Such devices can be adapted for use in the invention by appropriate combination with the other components specified herein to provide the periodic field-inversion.

Alternatively, the electrophoresis box can be readily fabricated from rigid materials such as, for example, acrylic plastic. Thus, a conventional laboratory scale gel box can be constructed from 0.25 inch thick clear acrylic plastic with inside dimensions 8.5.times.14 inches as viewed from the top. The gel platform can be 8.5.times.8.5 inches set in a plane 1.5 inches below the top of the gel box. Buffer chambers at the two ends can extend to a depth of 3 to 4 inches from the top of the gel box. Electrodes 8.5 inches log, 100% platinum (26 gauge), can be set directly against the intersection of the end walls and the bottom of the buffer chambers.

For a gel box of the foregoing size, buffer can be suitably re- circulated at a rate of about 250 ml/minute using, for example, a Cole Parmer (Chicago, Ill.) Masterflex T-7553-00 drive with a T-7018-21 head equipped with silicone tubing with 5/16 inch inner diameter.

The invention provides separation and resolution of nucleic acids such as DNA, RNA, cDNA of various base pairs and genomic DNA and chromosomes. For example, DNA sequences up to approximately 500-20000 bps; and DNA in the 100,000-10 million bp range ("chromosome mapping") are demonstrated. Furthermore, this invention provides separation and resolution of intact chromosomes ("chromosome sorting"); and resolving DNA conformers (DNA molecules of the same size, but different composition or shapes). This could be very valuable for scanning mutational analysis or to map out single nucleotide polymorphisms ("SNPs"). Increased throughput (5-10 fold increase in speed without concomitant loss of resolution) is also very valuable.

Separation of large DNA fragments

Existing methods of separation of large fragments of DNA (>100kb) based on FIGE and CHEF are slow and tedious. The PCT/IB 00/00723 discloses an improved method of separation of large fragments which shortens the separation time considerably from many tens of hours to several hours.

In this embodiment a dramatically improved method of separation of large DNA fragments (>100kb) is achieved by applying time varying electric potentials in a variable cross section separation gel (hyperbolic wedge).

This method is based on the motion of large DNA fragments in gel, the mutual interaction between gel and DNA fragments and forces acting on a DNA fragment in a time varying electric field. Specifically, the understanding of the frequency dependence of the net drift velocity of the DNA fragment (far from the resonance frequency) allows for the identification of frequency regions for which the net drift velocity of specific fragments is high. An example of a possible approach which can explain the motion of large DNA fragments in a gel was proposed by J. M. Deutsch, Science Vol. 24, 1988 p. 922.

Fig. 18 and 19 presents the result of the separation of large DNA fragments by the method of invention together with a comparison with standard methods of separation by PFGE. It is clearly evident that the invention provides for much shorter separation times.

Another example of fast separation by the method of invention is presented in Fig. 20.

The existence of non constant fields and of variable media conductivity results in uneven heating of the gel that require additional ways to remove the heat. Besides, care needs to be taken to prevent diffusion blurring due to concentration gradient of electrolyte in the gel. For that purpose the gradient region should be insulated with a glass plate from the covering buffer solution. The standard photo plates were used in our experiments. Despite this complication a great improvement in separation can be achieved by a relatively minor change relative to the conditions of standard electrophoretic separation. This is manifested particularly for solutions in which small and large DNA fragments have to be separated and identified.

Two buffers are commonly employed for PFGE--TAE and TBE (1x TAE is 40 mM Tris acetate, 1 mM EDTA, pH 8.0; 1x TBE is 89 mM Tris, 89 mM boric acid, 2 mM EDTA, pH 8.0). Both are used at a relatively low ionic strength to prevent heating and carry the designations of either 0.25 and 0.5x to indicate the dilution relative to the standard concentration. An added benefit to low ionic strength buffers is an increase in DNA mobility. For example, while using RGE to compare various buffers and agaroses, White (1992) found that lowering both TAE and TBE to 0.25 x gave the maximum mobility (40-50% faster than 1x). Below 0.25x, the DNA mobility dropped off.

The type of agarose also affects DNA separation, with the fastest mobilities and best resolution achieved in gels made of low electroendosmosis (EEO) agarose (Birren, et al., 1989; and White, 1992). Although most standard electrophoresis grades of agarose are suitable for PFGE (e.g., SeaKem GTG), agarose with minimal EEO will provide a faster separation. Several low EEO "pulsed field grades" are available, including FastLane and Gold (FMC BioProducts), and Megarose (Clontech).

As is the case with conventional electrophoresis, in field- inversion gel electrophoresis, large numbers of samples that have been loaded onto adjacent lanes of a single gel will migrate in parallel with one another, experiencing closely comparable electrophoretic conditions. The ability to make reliable, lane-to-lane comparisons between many samples on the same gel is one of the strongest features of conventional electrophoresis.

The applications of the field-inversion technique are not limited to DNA. The qualitative electrophoretic behaviour of other charged macromolecules such as RNA, proteins, nucleoprotein particles, and protein-detergent complexes are generally similar to that of DNA.

Generally, the sample is run in a support matrix such as paper, cellulose acetate, starch gel, agarose, or polyacrylamide gel. Such support matrixes are known to those skilled in the art. Agarose is a highly purified polysaccharide derived from agar. Unlike agar, it is not heavily contaminated with charged material. Most preparations, however, do contain some anions such as pyruvate and sulfate, which may cause some electroosmosis. Polyacrylamide is chemically complex, as is the production and use of the gel. Polymerization of a polyacrylamide gel is accomplished either by a chemical or a photochemical method. In the most common chemical method, ammonium persulfate and the quaternary amine,N,N,N',N' tetramethylethylenediamine or TEMED, are used as the initiator and the catalyst, respectively. In photochemical polymerization, riboflavin and TEMED are used Shining long wavelength ultraviolet light, usually from a fluorescent lamp, on the gel mixture starts the photochemical reaction. Since only a minute amount of riboflavin is required, photochemical polymerization is used when a low ionic strength is to be maintained in the gel.

The method can be conducted using power supplies, electrodes, gel media, electrophoresis chambers, and other elements as found in known devices, combined as taught herein. One preferred embodiment of the power supply means comprises two separate power supply units connected to a high voltage switching unit which is connected to electrodes A and B, while a third power supply is connected to electrodes B and C. A more preferred embodiment comprises two commercial programmable bipolar operational power supplies (BOPS). One BOPS is connected to electrode pairs A and B, the other to electrode pairs B and C. The system is controlled using a computer. A preferred arrangement comprises a digital computer equipped with an IEEE-488 Board and an IEEE-488 to analogue converter (Kepco SN 488-122), which controls a Kepco Bipolar Operational Power Supply (BOP) (Kepco BOP 500-M)(Kepco Inc. , Flushing, N.Y.). The power relay can be, for example, a Deltrol Controls (Milwaukee, Wis.), Series 900 DPDT No. 20241-83. For higher voltages or faster switching intervals, various other switching devices are available such as vacuum relays, solid-state relays, and the like. Illustrative power supplies are the Heathkit (Benton Harbor, Mich. ) 18-2717 Regulated High Voltage Power Supply and the Hewlett Packard (Berkeley Heights, N.J.) SCR-1P Model 6448B DC Power Supply.

The method also provides an apparatus for separating larger particles from smaller particles, which includes a container for holding a medium in which, the particles are suspended. The container has an inlet and an outlet and is disposed between two opposing primary electrodes. The two opposing primary electrodes are connected to a primary switching unit. The switching unit is connected to a controller. The two opposing primary electrodes generate a non-uniform electric field across the medium in a forward direction from the inlet of the container towards the outlet of the container. The primary direction defines the direction in which the particles travel through the medium. The two opposing primary electrodes also generate a non-uniform electric field across the medium from the outlet towards the inlet. The apparatus further comprises at least one pair of secondary opposing field generators disposed on opposing sides of the container at a secondary angle with respect to the inlet and the outlet. The secondary field generators are connected to a secondary switching unit. The controller sends signals to the primary and secondary switching units to apply the electric field, thereby creating a field environment.

In one embodiment, the apparatus comprises two pairs of secondary opposing field generators. The electric flow is generated by the power supply 1. Any voltage the system can tolerate may be used, e.g. 100 to 10000 volt, especially 500 to 10000 volt, preferably 500 to 5000 volt, e.g. 500, 1000, 5000 or even 10000 volt, provided the generated heat can be dissipated by proper cooling. At equilibrium, typical values are e.g. 1000 volt, 3 mA and 3 W or 500 volt, 10 mA and 5 W.

The electrophoretic matrix is a carrier for the electrophoretic separation. The hydraulic flow is generated e.g. by a pump, by stirring or by rotating the flow chamber 8 around a suitable axis and comprises as liquid phase a solution containing the mixture to be separated.

A qualitative molecular interpretation of these results can be made on the basis of measurements of the instantaneous velocity of linear DNA after field inversion (Platt and Holzwarth, Phys. Rev. A, 40, 7292, 1989), video micrographs of DNA during gel electrophoresis (Smith et al., Science 243, 203, 1989), and computer simulations of the motions of DNA during electrophoresis in gels (Deutsch and Madden J. Chem. Phys., 90, 2478, 1991; Zimm, J. Chem. Phys. 94, 2187 1991).

After the electrophoresis run is over, the gel is usually analyzed by one or more of the following procedures which are known to those skilled in the art: staining or autoradiography followed by densitometry; or blotting to a membrane, either by capillary or by electrophoresis, for nucleic acid hybridization, autoradiography or immunodetection. The most common analytical procedure is staining. Protein gels are most frequently stained with Coomassie Blue or by photographic amplification systems using or other first row transition metals. Coomassie Blue staining is only sensitive to about 1 µg of protein; whereas, the photographic amplification systems are sensitive to about 10 ng of protein. Once the gel is stained it can be photographed or scanned by densitometry for a record of the position and intensity of each band. Nucleic acids are usually stained with ethidium bromide, a fluorescent dye, which glows orange when bound to nucleic acids and excited by UV light.

About 10-50 ng of DNA can be detected with ethidium bromide. These gels are usually photographed for a record of the run.

A second common analytical procedure is autoradiography. It is used to detect radioactive samples separated on a slab gel. This procedure requires that the gel be first dried to a sheet of paper and then placed in contact with x-ray film. The film will be exposed only where there are radioactive bands or spots. The resulting autoradiogram is usually photographed or scanned by densitometry. The highly sensitive technique, blotting, is used to transfer proteins or nucleic acids from a slab gel to a membrane such as nitrocellulose, nylon, DEAE, or CM paper. The transfer of the sample can be done by capillary or Southern blotting for nucleic acids (Southern, 1975) or by electrophoresis for proteins or nucleic acids. Southern blotting draws the buffer and sample, usually DNA, out of an agarose gel by placing the slab in contact with blotter paper. A nitrocellulose or nylon membrane, layered between the gel and the blotter paper, binds the nucleic acids as they flow out of the gel. And since the membrane binds the DNA or RNA in the same pattern as on the original gel, the result is a faithful copy of the original. But Southern blots usually take a long time, frequently 10- 20 hours to prepare.

Lab on chip

PCT/IB 00/00723 discloses a variant of Lab-Chip techniques the special types of electrophoretic capilllary shapes (For example, United States Patent 5,582,705, issued December 10, 1996 entitled "Multiplexed capillary electrophoresis system" incorporated by reference herein) which have been designed for focusing. The adaptation of the focusing method for the capillary electrophoresis requires a capillary with varying cross section along the capillary. The capillary sections are calculated similarly to the wedge. The traditional methods of electrophoresis are performed in one or two dimensional gel media. The "dimensionality" of the separation system may be extended to dimensional coordinate structures formed in the plane and enabling multi step separation and handling. Methods of construction of such a chip are known to those skilled in the art. The advantage of this method in comparison with the "Lab on Chip" method is that instead of using pre designed single use patterns an optimal pattern can be generated on demand.

For creating a large quantity of barriers that generate non homogenous electric fields (gradient of field) the following gel geometry (dimension) is proposed. It is proposed to create a "labyrinth" from gel. The "labyrinth" consists of gel segments, cut out at a right angles (at an angle of 90 degrees). The electrodes are applied to the outset and to the end of the "labyrinth". The field gradient appears in the positions in which the gel turns through 10- 90 degrees. The field gradient is necessary for nonlinear mobility separation.

A particular method to produce multiple channels is based on the application of non polymerized gel to the surface with a special "pencil". The "pencil" consists of a volume filled up with non polymerized gel. The "pencil" is a part of a plotter. The plotter control is performed with PC. To operate the plotter the special software is used. Beforehand the applied gel is cut out according to special software. The special regions determined by the researcher are cut out on the prepared surface. The "knife" operation is performed with special software.

Apparatus and Method for Fractionation, Separation and Focusing of cells and cell fragments

PCT/IB 00/00723 discloses a method and apparatus for the separation, purification, manipulation and focusing of in particular large bio-particles and bio-macromolecules, such as chromosomes, cells, large DNA and RNA fragments and other components of cells. The method is suitable for the separation of particulate matter in the size range between 1 nm up to 1 mm both for bio-particles and for non-biological, atomic or molecular assemblies placed in liquid, conductive media.

The need for cell separation arises in many areas of medical diagnostics and treatment and biotechnology. Examples of such applications are separation of malignant cells from healthy cells, separation of fetal cells from maternal blood samples, isolation of mutant cells during strain development and others.

The general formalism applied to the new method of cell separation is based principally on dipolar forces caused by varying electric fields.

In general a dipolar force acting on a dielectric particle is given by:

$$F_d = (p \triangledown)E$$

where p is the dipole moment and E the nonhomogenous electric field.

The effective dipole moment of a particle p consists of a permanent dipole moment $p_0$ and an induced dipole moment and is given by:

$$p = p_0^2 \, E/3kT$$

k being the Boltzmann factor and T the temperature.

The forces acting on a charged particle in a nonhomogenous electric field will consist of the following

$$F_q = qE \text{ (Coulomb force)}$$

$$F_d = (p \triangledown)E \text{ (dipolar force)}$$

And $F_f = -6\pi a \eta U_d$ (friction force in a viscous medium, $U_d$ being the drift velocity, a the diameter of the particle and η the viscosity coefficient of the medium)

The general expression for the drift velocity of the particle is given by:

$$U_d = [qE+(p \triangledown)E]/6\pi a \eta$$

For field values applied in normal electrophoretical separation and for charge values characteristic for cells the coulomb term of the force is much larger generally than the dipolar force which makes electrophoretic separation of cells not efficient.

The time varying nonhomogeneous electric fields are utilized to enhance the dipolar term.

For example if a field with time average <E>=0 is used only the dipolar term will cause the movement of particles and allow separation.

In this case :

$$U_d = (p_0^2/3kT)\nabla E^2/6\pi a\eta$$

It is this expression when utilized in the appropriate conditions as described below which allows for efficient separation and sorting of particles like cells and other bio-molecules.

The particular embodiment of the present invention is described in greater detail herein below.

PCT/IB 00/00723 discloses a realization of a combined electrophoresis and dielectrophoresis system for the separation of quasi neutral or neutral particles and specifically cells. The separation is achieved by means of applying non homogenous electric fields generated by applying a non uniform electric field across a conductive medium (buffer solution, electrolyte) and by introducing spatial field non homogeneity by utilizing separation vessels with nonrectangular shape and in general possessing a variable cross section.

The system of the invention consists essentially of the following:

    1. A power supply with a control system

    2. A specially shaped separation cell for separation and extraction of cell fractions

    3. A detection system based on an optical microscope.

Sorting of cells (or other particles) is achieved by means of the application of nonhomegenous electric fields to a sample of cells placed in a conductive liquid.

The general diagram of the separation system subject of this invention is presented in Fig. 26.

The system consists of a separation chamber filled with a conductive liquid (electrolyte, buffer solution) suitable for the separation of cells, a controllable power supply with a wide dynamic range of voltage, current and power, methodology for the generation of non homogenous electric fields (computer controlled or manual) and a cell fraction detection and recovery system.

In one embodiment the separation is designed as shown in Fig. 27. The separation chamber consists of a narrow channel with a variable cross section, its boundaries being for example shaped as a hyperbola with a depth of 1-2 mm. The width of the separation channel is limited to several millimeters to prevent or minimize convection currents. For example the width of the hyperbolic channel 32 decreases from 5 mm at one end down to 2 mm at the other end, the total length being for example 5 cm. Two metallic electrodes are placed in a wide section of the chamber at both ends.

In another embodiment the separation chamber is designed as a miniature symmetrical double triangular wedge with a narrow opening in the center as shown in Fig. 29. The dimensions of the opening are about 50 $\mu$m . By applying a variable square shaped potential to electrodes placed at the wide ends of the separation vessel large field gradients are generated in the narrow region allowing for separation of cells with different dielectric properties as shown in the example.

It becomes clear that separation chambers with a variety of shapes and channel cross sections can be designed to achieve desired non-homogenous electric fields. These channels can have cross section shape like for example rectangular, circular like a capillary or any regular and non regular shape. Generally the variable cross section vessels or separation chambers or channels are designed in shapes and dimensions to fulfill the requirement for creating specific field inhomogeneities with a programmed linear dependence along the vessel. Some additional examples of variable cross section separation chambers are shown in Fig. 30(a-o).

A very powerful realization of the method is based on miniaturized channels which basically form a microfluidic system which can have a multiplicity of channels with identical or varying dimensions to allow for manipulation, sorting and detection of cells.

For the purpose of detection an optical microscope is focused at a certain point in the separation chamber for visual detection of moving cell fractions.

In another embodiment specific particles, for example cells can be reacted with fluorescent ligands (stained) as known in the art and detected by illuminating the channel with ultraviolet light.

In still another embodiment the detection system may consist of an illumination system for example a laser and the separated particle fractions are detected by measuring the scattered light intensity as known in the art.

As in the case of DNA separation the use of combined electrophoretic and dielectrophoretic forces enable the creation of virtual traps. These traps appear at points along the channel where the total velocity due to electrophoretic and dielectrophoretic forces acting on a specific fraction is equal zero.

In such a way this invention makes possible the accumulation and focussing of specific fractions in preset locations along the separation channel for the fast detection and extraction. These locations of focusing traps can be changed by manipulation of the electric voltage parameters.

As in the previous embodiments detection and visualization methods known in the art are applied here.

In another embodiment of this invention the separation chamber is designed to enable fast extraction of separated fractions for further analysis and diagnostics. In this design along the separation channel one or several perpendicular separation channels are added, Fig. 31. By applying voltage forms across these perpendicular channels fractions passing through the main channel or focused at these channel position can be extracted.

Traveling Concentration Waves (TCW) for large particle separation

PCT/IB 00/00723 also discloses a dielectrophoretic separation technique for the improved separation and manipulation of bioparticles in an extended range of sizes and shapes. More specifically particles can be separated according to their mass, density, internal and surface charge distribution, shape and dielectric properties.

Sorting of molecules is performed by the means of Traveling Concentration Waves (TCW). Several types of TCW can be realized, the main example being pH waves or "moving isoelectric points" (MIP). Fig. 32 presents a schematic shape of such a wave generated by applying a potential waveform presented in Fig. 35 in a separation cell presented in Fig. 38.

In this method, the nonionic analytes are separated into sharp zones in a separation chamber of a variety of shapes for example an elongated (cuvette) filled with a gel and buffer system enclosed between two electrodes. Another example is a rectangular chamber like in regular electrophoresis or a tube like segment enclosed between two or more electrodes. These chambers can be constructed of glass, polymeric materials, plastics and/or other materials as well. For achieving separation the electrodes are energized by being subjected to an alternating potential form of special design. This alternating potential creates a periodically moving region of a high electric field gradient acting on the sample. The separation occurs according to the nonlinear electrophoretical mobility of the separated molecules.

In one variation of the embodiment of the present invention a single buffer solution for example TAE (Tris-Acetate EDTA) is subjected to a variable potential which generates alternatively at each of the electrodes regions rich in $H^+$ ions and regions rich in $OH^-$ ions. These regions originate at the electrode and expand along the vessel.

Since the electrophoretic mobility of the $H^+$ is very large the expansion is very rapid and the leading edge very steep. This wave front when reaching the analyte sample injected in the vicinity will act on the sample and cause the separation of the sample according to its molecular constituents and their dielectric properties. On changing the polarity an $OH^-$ wave starts expanding and neutralizes the hydrogen ions. Since the mobility of the $OH^-$ ions is much lower ($\sim$80x lower) the wave front will be very shallow, the drift time much longer and the force acting on the sample will be negligible.

By repeating this process many times an efficient separation procedure is established resulting in a very fast separation of large bioparticles.

A further variation of this embodiment enables the separation of proteins by their isoelectric points. By selecting a buffer solution with a predetermined pH and by controlling the current one can design a pH step which will immobilize all proteins with pI in the pH interval while all other proteins will be separated by the wave front.

This mode is particularly suitable for particles like proteins in which the main dielectric interaction is with the surface.

Another variation of this embodiment of the invention is realized by using two immiscible or slowly interdiffusing buffer solutions with different cation ions: one with $H^+$ and the other with for example $K^+$. By filling a cuvette with equal amounts of the buffer solutions a sharp border zone is created in the center of the vessel. The application of an electric potential to the electrodes inserted in the buffer solutions at both ends will create a sharp electric field jump at the interface between the buffers. If the buffer solutions are selected in such a way that the fast cations when crossing the interface are abruptly slowed down the effect of applied electric field will cause the appearance of a charge wave crossing the interface.

This charge wave will generate a very high local field and field inhomogeneity, which will move under the applied potential. Biomolecules placed on the way of this moving charge will be subjected to the force generated by the electric field.

Reversing of the electric potential will result in a fast decay of the charge wave.

Alternating the potential will cause efficient separation of the fractions in the analyzed sample.

Separation of proteins

PCT/IB 00/00723 discloses the employment of shaped separation vessels for an improved separation of proteins.

Separation of proteins by their net charge can be attained by several electrophoretic systems.

However most problems associated with existing systems are related to the stability of the electric field and thus the stability of proteins running in this field for rectangular shaped vessels.

Stabilized electric fields are achieved by using hyperbolically shaped boundaries of the separation vessel.

By using these vessels more distinct protein bands are obtained and more proteins can be visualized. The shaped geometry enhances protein migration in different buffer systems including continuous, moving boundary and isoelectric focusing techniques.

For example a monoclonal antibody was separated by discontinuous and moving boundary electrophoresis on both regular and hyperbolically shaped gel geometries. Fig. 37

In the moving boundary method the antibody runs faster in the shaped gel and only in this gel there is a good separation of the protein into three distinct bands (Fig. 38 left panel).

In the discontinuous system the protein migrated a similar distance, however, separation was better in the wedge shaped gel and three antibody species could be detected.

These bands were also visualized in isoelectric focusing and confirmed the separation result.

In another example moving boundary electrophoresis was used to separate human plasma.

A comparison between rectangular and wedge shaped geometries under similar electrophoresis conditions shows that the protein bands in the shaped wedge are more distinct and more proteins can be visualized. Furthermore less streaking of proteins is observed Fig. 39.

Examples for DNA separation

The simplicity of the method discloses in PCT/ IB 00/00723 high resolving power and the ease of combining it with other techniques makes it a very powerful and potential technique for a wide range of applications. The disclosure comprises the method, the design and device for performing nonlinear electrophoresis based on several methods of obtaining special electric field patterns for the separation and manipulation of macromolecules. The methods comprise: 1. The generation of "virtual traps" for DNA focusing by producing special electric signals generated by a computer driven voltage generator 2. The generation of steep field jumps by manipulating gel medium composition for inverse focusing. Several of the abovementioned methods can be combined to create a "Lab on Chip" concept for the manipulation of biomolecules and particles.

This invention relates to an apparatus and methods, by which a separating procedure and system can be produced for the manipulation of selected molecular species. The method is based on the formation of a two dimensional, multi segment trajectory constructed from separating media in which each segment is designed to perform a certain separation procedure. In such a way a multi step separation is performed resulting in the trapping of selected molecules.

Materials and Methods:

Tris-Acetate or tris-phospate buffer solution (0.04 M tris-acetate or tris-phospate + 0.002 M EDTA) is used as the working buffer. To stain the DNA fragments in the UV range Ethidium Bromide or Crystal Violet (Sigma USA) are applied. The agarose gels prepared for the above experiments were based on the agarose for DNA electrophoresis produced by BioRad Lab. Electro-endoosmosis parameter (Fritsch and J. Sambrook Laboratory Manual "Molecular Cloning" Cold Spring Harbor Lab 19 used in these measurements was m= -0.1). The experiments were conducted according to T. Maniatis, E.E. 82)

Example 1

Fraction compression in a linear wedge at constant Potential

The surface for gel deposition is placed at an angle to the horizontal which causes the formation of a the wedge when the volume is being filled by agarose gel (0.6%). One end has a thickness of 0.2 cm, the other end is of 1.7 cm. The wedge is covered with buffer solution of 1X TAE (tris- acetate and EDTA) with a layer of 0.2 cm thick, 5.5 cm long and 4.0 cm wide.

Effective thickness of the gel ends are of 1.9 and 0.4 cm. The marker DNA lambda-phage HIND III is injected into the special start pockets, which are located at the distance of 6.5 cm from the thick end of gel. Then a voltage of 10V is applied to the electrodes. The three fractions of DNA go through the distance of 1.4 cm, 2.2 cm, 2.6 cm respectively. Since the electric field falls monotonically in the direction of the wide gel end focusing of the various fractions is observed (Fig. 24).

Example 2:

Fraction compression in a hyperbolic wedge at constant Potential

Two hyperbolic inserts from polymethyl acrilate are placed in the cell with the following characteristics: the length is 13 cm, the width is 10 cm. The insert dimensions vary according to a hyperbolic function with parameters such that the hyperbola narrows from 0 at one end to 4.4 cm at the other end. Agarose gel (0.6%) is poured into the volume between the inserts, creating a gel shaped as a hyperbolic wedge ("hyperwedge") with the length of 8.4 cm and the width of from 10 cm in the widest part to 1.2 cm in its narrow part. The wedge is covered by buffer solution of TAE (height 0.2 cm). The marker DNA lambda-phage is introduced into the start pockets, located at distance of 1.5 cm from the narrow edge. When a constant potential is applied a linearly decreasing field from the narrow to wide end of the hyperbolic wedge provides for focusing of the DNA fractions (see Fig. 25).

Example 3:

Nonlinear focusing in the hyperbolic wedge with time varying potential (MEANDER)

The hyperwedge, which is described in the Example 2, is used for nonlinear DNA focusing. In this Case a variable in time periodic signal of the bipolar pulse wave type (meander) is applied to the electrodes. The average over a period of the electric field is relatively small (less than 2V/cm), in comparison with a field amplitude during the period of the meander action (less than 20V/cm). The sample DNA is entered into the start pockets which are placed in the "narrow" end of the agarose gel (0.6%). Due to nonlinear focusing the more heavy fractions move to the direction of the wide gel end, while the light ones remain behind. With different parameters for the meander voltage the fractions can be made to move to the opposite direction from the start. This behavior differs sharply from all other, traditional methods of electrophoretic DNA separation where everything is determined by the ratio of charge/size. When the observation times are longer than 24 hours, focusing in the so-called virtual traps can be seen at positions where the fraction velocity goes to zero ( Figs. 8, 9, 10, 11, 12).

Examples of cell separation

Example 4.

Consider an electrophoretical cell, partitioned across by non-conductive dielectric walls. There is a hole with the diameter of 50 μm in the wall. The wall divides the cell in to two cameras: right and left one. There is an electrode in each camera, to which a variable in time voltage (AC) is applied with zero average mean voltage. Both cameras near the holes filled with the electrolyte (buffer). A sample, containing a mixture of RBC and hybridoma, is placed into the camera. During the application of a periodic voltage with zero average on the electrodes of the cell, large gradients of the squared electrical field are observed near the hole. Therefore, a dipole power acts on the RBC, forcing them to drift to the area of the strong field. This phenomenon is demonstrated in Fig. 40.

RBC concentrate near the "hole" when a variable signal is applied. Symmetrical and asymmetrical (Fig. 12) signals were used.

Separately the nonlinear mobility of RBC was determined by measuring the RBC drift velocity as a function of electric field, see Fig. 49.

Notice that in particles, if the induced dipole moment exceeds the intrinsic dipole moment, it is possible to have a negative total dipole moment and therefore particles can be popped out from the strong field. Evaluations show that for field tensions of 10-30 V/cm, for the scale of spottiness (size of hole) of 10 μm, for the particle with their intrinsic dipole moment of tens of D, dipole drift velocities comparable with the electrophoretical (Coulomb) drift velocity which can be observed during a characteristic electrophoresis time in particular for live cells. During this process cells near the hole will be divided in fractions, in accordance with the value of squared dipole moment.

During the process of such an electrophoresis all cells with positive dipole moment, will gather near the hole. This is a defect of this approach - protein fractionation according to the dipole moment in such system causes their accumulation (focusing) in the region of strong fields. Different types of cells concentrate at small distances from each other (spots of focusing for different factions are comparatively close).

To realize fractionation of cells according to the dipole moment three options are offered.

Example 5.

The first variant is that the right camera is changed by a fine capillary, in which fractions will be divided. This is a sort of dipole eye-dropper and will contain fractions divided by their dipole characteristics. In order to avoid the agglomeration of the fractions in the capillary at the input, it is necessary to apply a small electrical field. Thereby, on the electrodes of an electrophoretical cell a periodic asymmetric electrical signal, with the small average over a period and large average of the square of the tension of the field, is necessary.

Example 6

One more variant of fraction division according their dipole characteristics is that particles, collected (focused) in the hole in Example 4, by applying variable increasing on the average field amplitudes. During this event first of all particles, with the largest drift velocity, i.e. those particles, that have the largest ratio of an Coulomb power to dipole power, will begin to leave. If the average of the field gradually, slowly increases, through the hole consecutively all fractions will leave, focused in it during dipole focusing, as described in the Example 4.

Example 7

Another way to produce a "sucking out" the most mobile cells in by applying a constant electric field into the special capillary. In order to do this the area of instrument, where separation is produced, will be connected by the special capillary with a third electrode and when voltage is applied the most mobile cells will be "sucked out " from the area of separation. For the accumulation of concentrated cells special terminals were constructed (Fig. 31) Since the mobility has nonlinear components, the mobility depends on the electric field strength so that the drift velocity allows to realize focusing of the fractions. Notice that during this focusing maximum of resolution is reached.

The next example is connected with focusing of cell fractions in another more complicated structure.

Example 8

Consider a coniform narrowing capillary, with non-equal(corrugated) form, with an input radius 10 μm, output radius 2 μm and length 100 μm. General narrowing of the capillary is such that its cross section is varying according to a hyperbolic law. The surface of the capillary has periodic narrowings and expansions with an amplitude of 0.5 μm(Fig. 30 n).

Each of the narrowings of the capillary presents itself as if there were a hole, in which focusing of particles is possible. The capillary is filled with electrolyte and placed in the electrophoresis cell. If a variable voltage with small average but with large peak-to-peak amplitude ( average field <E> is 2-5% from the amplitude $E_0$)is applied, focusing of separate fractions is possible, moreover each fraction finds its "own" hole, in which it will stop. Indeed, because the section "on average" along the length of capillary is narrowed in a hyperbolic way, the electric field "in average" increases linearly.. Herewith the Coloumb power, which is proportional to the field, grows linearly, while the dipole power grows according to a square law according to the distance from the beginning of capillary. Presence of corrugated edges on the capillary brings about periodic "dipole barriers" that different fractions need to "overcome". The delay ability of such barriers grows with the distance, measured from the beginning of the capillary. Each fraction has its own barrier, which it cannot overcome so that it is focused in this place.

Example 9

This is an illustrative example of a separation of several particles by the TCW method.

The system under study consisted of a gonococcal vaccine made of strains of gonococcus bacteria. The concentration of bacteria is 100/ml.

These bacteria were stained with propydium and eosine for fluorescent imaging.

The separation cell consisted of a rectangular vessel 10 cm long and 7cm wide filled a mixture of a phosphate buffer [$Na_3PO_4$ (0.1 M), $Na_2HPO_4$ (0.1M) in a water solution] and a water solution of Glycerol in a 1:1 ratio. Two platinum wire electrodes were submerged at both ends of the cell.

When a variable voltage waveform as shown in Fig. 35 was supplied from the power supply to the electrodes a periodical charge wave was generated and as a result several fractions of the vaccine were separated as shown in Fig. 35. Separations of 1cm between fractions were achieved in several hours.

Example 10

In this illustrative example a single charge wave was generated by the electrolytic process for the focusing of Erythrocytes dispersed in a physiological solution. Two focusing systems were employed.

In one of them a substrate made of filter paper was wet by the physiological solution together with the dispersed red blood cells.

When a voltage was applied to the wet paper through the electrodes a sharp front of erythrocytes was observed advancing from both electrodes toward the center and finalizing in a sharp band visible in the center as seen in Fig. 36. This effect was further demonstrated by using pH indicators and visualizing the charge wave.

Example 11:

A mixture containing 50% of RBC and 50% of Hybridoma ($\sim$3*10^5 cells per μl) was placed into the wedge and a variable voltage ±50 Volt with frequency 2 Hz was applied. After $\sim$15 min the cells separated into two clusters: an RBC cluster and a Hybridoma cluster. The RBC cluster that consisted of 93% of RBC and 7% Hybridoma cells and was situated near the channel. Subsequently, the the variable voltage was stopped and a constant voltage of 60 volts was applied, so that electrical current moved through the channel. RBC was then transported from the wedge through the channel and concentrated at the terminal. The final resolution of separation was close to 1:10. The amount of RBC was $\sim$2600 cells and the amount of Hybridoma was 397 cells.

Example 12:

For improving the resolution in the separation of cells a device consisting of three separation vessels was used interconnected by connecting channels. The cells were concentrated in the first wedge/separation vessel then the selected type of the cells were moved to the second wedge via the connecting channel. At the second wedge the process of separation was repeated and then the cells were moved into the third wedge where they were once more concentrated, see Fig. 50.

A mixture containing 50% of RBC and 50% of Hybridoma ($\sim$3.8*10^5 cells per μl) was placed into the wedge. A variable voltage ±50 Volt and frequency 2 Hz was applied. After $\sim$15 min the cells separated into two clusters: RBC cluster and Hybridoma cluster. The RBC cluster consisted of 91% of RBC and 9% of Hybridoma cells and was situated near the channel .

After this the variable voltage was stopped and a constant voltage of 60 volt was applied, so that electrical current moved through the connecting channel from the first into the second separation vessel. RBC also moved from the first wedge through the channel into the second wedge. After that the process of concentration was repeated at the second wedge

A variable voltage ±50 Volt and frequency 2 Hz was applied . After ∼15 min the cells separated into two clusters: RBC cluster and Hybridoma cluster.The RBC band consisted of 98.6% RBC and 1.4% of Hybridoma cells and was situated near the connecting channel that connected the second and third wedges. Subsequently, the variable voltage was stopped and RBC band were moved into the third wedge. Then RBC were concentrated by an ac voltage in the third wedge.

The final resolution of the separation was close to 1:250. The amount of RBC was ∼1024 cells and the amount of Hybridoma cells was 4 cells.

Example 13:

A different device consists of a circle wedge construction, the circle form of this device allowed for n separation cycles. The cells were concentrated and then moved via a connection duct to the neighboring wedge. The process was repeated several times until the required separation enhancement was achieved. So the combination of dielectrophoretic separation and electrophoretic transport realized excellent results showing that one type of cell can be separated from another, see Fig. 51.

Example 14:

A mixture containing 50% of RBC and 50% of Hybridoma (∼2.2*10$^5$ cells per μl) was placed into the wedge. A variable voltage ±50 Volt and frequency 2 Hz was applied .

After ∼15 min the cells separated into two clusters (see Fig. 52 A): RBC cluster and Hybridoma cluster. The RBC cluster consisted of 91% of RBC and 9% of Hybridoma cells was situated near the channel.

Subsequently, the variable voltage was stopped and a constant voltage of 60 volts was applied, so that electrical current moved through the connecting channel from the first unit into the second. RBC also moved from the first wedge through the channel into the second wedge, see Fig. 52 B.

After that the process of separating was repeated in the second wedge. Again, a variable voltage of ±50 V with a frequency 2 Hz was applied. After ∼15 min the cells separated into two clusters: RBC cluster and Hybridoma cluster. The RBC band consisted of 97.6% RBC and 2.4% Hybridoma cells and was situated near the connecting channel that connected the second and third wedges (see Fig. 52 C).

Last, the variable voltage was stopped and the RBC cluster was moved into the third wedge, see Fig 52 D. Then, RBC was separated by a variable voltage in the third wedge. The final resolution of the separation was close to 1:1000. The amount of RBC was ∼974 cells and the amount of Hybridoma cells 1 cell.

Fig. 53 shows a linear arrangement of three separation chambers linked by channels. In the left chamber a sample is separated and will be moved in the middle chamber by electrophoresis. In the middle chamber another seperation is performed.

**Claims**

1. A method for moving, isolating and/or identifying particles in a sample by placing said sample in a spatially varying electrical field wherein the spatially varying electrical field is following a mathematical non-monotonous function, selected from the group consisting of linear, hyperbolic, parabolic, functions or $y \sim x^{p/q}$ and combinations and/or substitutions thereof wherein p and q being integers or is following a smooth envelope consisting of a discrete set of a least two step-wise or piece-wise constant sections or functions, linear or spatially varying monotonous or non-monotonous functions.

2. A method of claim 1 wherein the non-monotonous function is non-symmetric to an extremum.

3. A separation or electrophoresis device and/or medium for performing the method according to claim 1 or 2, having a first end portion and a second end portion and a varying cross-section between the first and second end portion wherein the cross-section is varying according to a non-monotonous function and the non-monotonous function is asymmetric with respect to the mid-plane between the first end portion and the second end portion.

4. A separation or electrophoresis device and/or medium for performing a method according to claim 1 or 2, having a first end portion and a second end portion and a varying cross-section between the first and second end portion wherein at least one projection of the cross-section is varying according to a non-monotonous function and the non-monotonous function is asymmetric with respect to the mid-plane between the first end portion and the second end portion.

5. A separation and/or electrophoresis medium with varying cross section or projection of at least one cross section wherein the varying cross section or the at least one projection of the cross section follows a smooth envelope consisting of a discrete set of a least two step-wise or piece-wise constant sections or functions, linear or spatially varying monotonous or non-monotonous functions.

6. A separation or electrophoresis device and/or medium for performing a method according to claim 1 or 2 comprising at least one first subunit and at least one second subunit, the at least one first and at least one second subunit having a substantially constant cross section and the cross-section of the at least one first subunit is different to the at least one second subunit.

7. The device and/or medium according to claim 6 wherein the at least first and at least second subunit are arranged in a plurality and the shape of the arrangement follows a smooth envelope consisting of a discrete set of step-wise or piece-wise constant functions or sections, linear or spatially varying monotonous or non-monotonous functions.

8. The device and/or medium of claim 6 or 7 wherein the device is having a substantially elongated first subunit ending in a tapered second subunit yielding a trombone-like structure or silhouette.

9. The device of claim 8 and/or medium wherein the tapered second subunit is at the cathodic side of an electrophoresis device.

10. A separation or electrophoresis device and/or medium for performing a method according to claim 1 or 2 having a first end portion and a second end portion and a varying cross section between the first and second end portions wherein the cross section or an at least one projection of the cross section is following a smooth envelope consisting of a discrete set of a least two step-wise or piece-wise constant sections or functions, linear or spatially varying monotonous or non-monotonous functions.

11. An electrophoresis medium having a first end portion and a second end portion having a thickness varying in a direction from the first end portion towards the second end portion.

12. A device and/or medium for 2 D-electrophoresis of samples in particular biopolymers such as proteins, having a first end portion and at least one channel and a varying cross-section between the first and the second end portion wherein the cross-section is varying according to a monotonous or non-monotonous function or envelop function and the at least one channel is arranged substantially perpendicular to a direction of the electric field of the first dimension 2 D electrophoresis.

13. The device and/or medium of claim 12 wherein the number of channels is selected according to a resolution of a pH-gradient and/or the resolution of the separation.

14. A Method for separating biopolymers such as DNA, with impulse electrophoresis using a separation medium having a first end portion and a second end portion and a continually varying cross-section wherein the first end portion has a larger cross-section than the second end portion wherein a sample is applied at the second end portion, the electrophoresis is performed from the second end portion to the first end portion, the resonance time is longer than the periods of the signal.

15. The method of claim 14 wherein the ratio of the cross-section of the wider end portion and the narrower end portion is about 3.

16. A method for the separation, isolation and/or enrichment of cells and/or cell fragments by applying a periodic voltage with substantially zero average in a separation vessel wherein the separation vessel has a varying cross section and at least one channel or tube connected to it substantially near the average cross section.

17. The method according to claim 16 in which sequentially the following steps are performed: (1) applying a periodic voltage with substantially zero average in the part of a separation vessel with varying cross section; (2) applying a dc electric field across the channel.

18. The method according to claim 16 and/or 17 wherein the dc electric field transports selected cells or cell fractions through the channel, at which end either the cells or cell fractions are collected or the process steps are repeated.

19. A device and/or medium for the separation, isolation and/or enrichment of cells and/or cell fragments in a separation vessel wherein the separation vessel has a varying cross section and at least one channel or tube connected to it substantially near the average cross section.

20. The device and/or medium according to claim 19 having a plurality of separation vessels.

21. The device and/or medium according to claim 19 and/or 20 comprising a plurality of separation vessels wherein the separation vessels have at least one common channel.

22. The device and/or medium according to any one of the claims 20 to 21 wherein the plurality of separation vessels interconnected by channels can be arranged in a circular manner, thus enabling any number of separation, isolation and/or enrichment cycles.

Fig. 41

Fig. 42

Fig. 43

Fig. 44

Fig. 45

13

11    12

Fig. 46

EP 1 211 510 A1

Fig. 47

33

a

b

c

d

e

Fig. 48

Fig. 49

Fig. 50

Fig. 51

Fig. 52 A

Fig. 52 B

Fig. 52 C

Fig. 52 D

Fig. 53

Fig.1

Fig.2

Fig.3

Fig.4

Fig.5

Fig.6

Fig.7

Fig.8

Fig.9

Fig.10

NEP: ← 7 V/cm x 5s → 2.67 V/cm x 15s

Fig.11

**0 MIN    31 SEC    5 millisec**

Fig.40

Fig.12

Fig.13

Fig.14

dependence velocity from coordinate

focusing point

Fig.15

dependence velocity from coordinate

focusing point

Fig.16

Fig.17

**D**

773.3
619.0
610.5
582.0
533.5
485.0
436.5
388.0
339.5
291.0
242.5
194.0
145.5
97.0
48.5

*1% agarose gel, 4.5 V/cm, 15°C for 48 hours. Switch times ramped from 5-120 seconds.*

NEBioLabs Cat #340

**48 hrs.**

**E**

Size (kb)

— 582.0
— 533.5
— 485.0
— 436.5
— 388.0
— 339.5
— 291.0
— 242.5
— 194.0
— 145.5
— 97.0
— 48.5

**3.5 hrs.**

**F**

Size (kb)

— 582.0
— 533.5
— 485.0
— 436.5
— 388.0
— 339.5
— 291.0
— 242.5
— 194.0
— 145.5
— 97.0
— 48.5

**3.5 hrs.**

Fig.18

**A**

194.0
145.5
97.0
48.5
23.1
9.42
6.55
4.36

2.32
2.03

1% agarose gel, 6 V/cm, 15°C for 15 hours. Switch times ramped from 1–12 seconds

NEBioLabs Cat #350

**15 hrs.**

**B**

Size (kb)

242.5
194.0
145.5
97.0

48.5
23.1

9.42

6.55

4.36

**2 hrs.**

**C**

1st Dimension

2nd Dimension

Size (kb)

291.0
242.5

194.0

145.5

97.0

48.5

23.1

9.42

Fig.19

EP 1 211 510 A1

Lanes

Fig.20

Fig.21

Fig.22

Fig.23

EP 1 211 510 A1

Fig.24

Fig.25

Fig.26

Fig.27

Fig.28

Fig.29

Fig.30 a

Fig.30 b

Fig.30 c

Fig.30 d

Fig.30 g

Fig.30 h

Fig.30 i

Fig.30 j

Fig.30 n

Fig.30 o

The third electrode

Fig.31

C(H+)

X

Fig.32

Fig.33

Fig.34

Fig.35

Fig.36

# Comparison Between Discontinuous and Moving Boundary Electrophoresis

A. Moving Boundary

B. Discontinuous

Time(min):  45  45  45  45

Fig.38

Fig.37

## Moving Boundary Electrophoresis

Time(min):　　　55　　　39

Fig.39

EP 1 211 510 A1

**European Patent Office**

## EUROPEAN SEARCH REPORT

Application Number

EP 00 12 6124

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | US 4 148 703 A (TROP MOSHE ET AL) 10 April 1979 (1979-04-10) <br><br> * abstract * | 1,3-6, 10-12, 14,16,19 | G01N27/447 |
| A | EP 0 280 567 A (FUJI PHOTO FILM CO LTD) 31 August 1988 (1988-08-31) <br> * abstract; figure 1 * | 1 | |
| A | DE 43 14 755 A (KNOLL MEINHARD PROF DR ;CAMMANN KARL PROF DR RER NAT (DE)) 10 November 1994 (1994-11-10) <br> * column 4, line 28 – column 6, line 9; figure 4 * | 1 | |
| D,A | US 5 453 162 A (SABANAYAGAM CHANDRAN R ET AL) 26 September 1995 (1995-09-26) <br> * abstract * | 1 | |
| A | EP 0 070 963 A (SHIMADZU CORP) 9 February 1983 (1983-02-09) <br> * abstract; figure 1 * | 1 | TECHNICAL FIELDS SEARCHED (Int.Cl.7) <br><br> G01N |
| A | BURGGRAF N ET AL: "A NOVEL APPROACH TO ION SEPARATIONS IN SOLUTION: ÖSYNCHRONIZED CYCLIC CAPILLARY ELECTROPHORESIS (SCCE)" SENSORS AND ACTUATORS B,CH,ELSEVIER SEQUOIA S.A., LAUSANNE, vol. B20, no. 2/03, 1 June 1994 (1994-06-01), pages 103-110, XP000478148 ISSN: 0925-4005 * figure 3 * | 22 | |
| A | WO 91 12904 A (SOANE TECHNOLOGIES INC) 5 September 1991 (1991-09-05) <br> * abstract * | 1 | |

The present search report has been drawn up for all claims

| Place of search | Date of completion of the search | Examiner |
|---|---|---|
| THE HAGUE | 17 July 2001 | Duchatellier, M |

## ANNEX TO THE EUROPEAN SEARCH REPORT
## ON EUROPEAN PATENT APPLICATION NO.

EP 00 12 6124

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2001

| Patent document cited in search report | | Publication date | Patent family member(s) | | Publication date |
|---|---|---|---|---|---|
| US 4148703 | A | 10-04-1979 | NONE | | |
| EP 0280567 | A | 31-08-1988 | JP | 1930885 C | 12-05-1995 |
| | | | JP | 6060886 B | 10-08-1994 |
| | | | JP | 63210653 A | 01-09-1988 |
| | | | JP | 63210654 A | 01-09-1988 |
| | | | DE | 3881905 A | 29-07-1993 |
| | | | US | 4844786 A | 04-07-1989 |
| DE 4314755 | A | 10-11-1994 | NONE | | |
| US 5453162 | A | 26-09-1995 | CA | 2131597 A | 10-03-1995 |
| | | | EP | 0644420 A | 22-03-1995 |
| | | | JP | 7167837 A | 04-07-1995 |
| EP 0070963 | A | 09-02-1983 | JP | 1451594 C | 25-07-1988 |
| | | | JP | 58019550 A | 04-02-1983 |
| | | | JP | 62058460 B | 05-12-1987 |
| | | | JP | 1451778 C | 25-07-1988 |
| | | | JP | 58019551 A | 04-02-1983 |
| | | | JP | 62058461 B | 05-12-1987 |
| | | | JP | 1451595 C | 25-07-1988 |
| | | | JP | 58019552 A | 04-02-1983 |
| | | | JP | 62058462 B | 05-12-1987 |
| | | | JP | 1486796 C | 14-03-1989 |
| | | | JP | 58076751 A | 09-05-1983 |
| | | | JP | 63034427 B | 11-07-1988 |
| | | | DE | 3270957 D | 12-06-1986 |
| | | | US | 4459198 A | 10-07-1984 |
| WO 9112904 | A | 05-09-1991 | US | 5126022 A | 30-06-1992 |
| | | | AU | 637895 B | 10-06-1993 |
| | | | AU | 7467591 A | 18-09-1991 |
| | | | CA | 2075969 A | 29-08-1991 |
| | | | EP | 0521911 A | 13-01-1993 |
| | | | JP | 3103031 B | 23-10-2000 |
| | | | JP | 8327597 A | 13-12-1996 |
| | | | JP | 2601595 B | 16-04-1997 |
| | | | JP | 5504628 T | 15-07-1993 |
| | | | US | 5750015 A | 12-05-1998 |
| | | | US | 5858188 A | 12-01-1999 |
| | | | US | 6054034 A | 25-04-2000 |
| | | | US | 6176962 B | 23-01-2001 |
| | | | US | 6093296 A | 25-07-2000 |

EPO FORM P0459

For more details about this annex : see Official Journal of the European Patent Office, No. 12/82